# EUROPÄISCHE PATENTANMELDUNG

(11) **EP 4 385 779 A2**
(43) Veröffentlichungstag der Anmeldung: **19.06.2024**
(21) Anmeldenummer: 24172914.4
(22) Anmeldetag: 09.07.2020
(51) Int. Cl.: B60K 1/02

(54) **GETRIEBE, INSBESONDERE TWIN-GETRIEBE, UND LAGERBRILLE MIT EINER VORTEILHAFTEN ÖLSCHMIERUNG DURCH EIN MEHRKAMMERNSYSTEM SOWIE GEEIGNETES VERFAHREN ZUM SCHMIEREN EINES SOLCHEN GETRIEBES**

(30) Priorität: 09.07.2019 DE 202019103779 U; 09.07.2019 DE 202019103770 U; 09.07.2019 DE 202019103771 U; 09.07.2019 DE 202019103778 U; 09.07.2019 DE 202019103781 U
(62) Teilanmeldung aus: 20742190.0
(71) Anmelder: hofer powertrain innovation GmbH, 72622 Nürtingen (DE)
(72) Erfinder: Lutz, Dr. Mathias, 72070 Tübingen (DE); Kalmbach, Klaus, 72116 Mössingen (DE); Lee, Markus, 72622 Nürtingen (DE); Kelch, Fabian, 70190 Stuttgart (DE)
(74) Vertreter: Cremer & Cremer

(57) **Zusammenfassung**

Eine Lagerbrille 330 ausgebildet mit einer Lochstruktur 344 als eine einzige Durchgangsöffnung dient zur Aufnahme jeweils eines Endes zweier Ausgangswellen. Die Lagerbrille 330 weist Ölzuführflächen 412, 414 auf, die für ein zunächst passives Zuführen eines als Spritzöl aufgenommenen Getriebeöls zu einem Beölungsreservoir ausgebildet sind. Das Beölungsreservoir schließt an einen Ölsammelbereich 416 auf den Ölzuführflächen 412, 414 an, von wo aus das Getriebeöl in eine Reservoirkammer 448, und durch eine Beölungsöffnung oder eine Beölungsdüse aus der Reservoirkammer in eine Lagerbeölungskammer 450 gelangen kann. In einem Verfahren zum Schmieren eines Getriebes mit einer Lagerbrille 330 wird durch Zentrifugalkraft im Getriebe verspritztes Schmiermittel gesammelt um in der Reservoirkammer aufbewahrt zu werden. Getriebeöl gelangt aus der Reservoirkammer beidseitig zu rotierenden Flächen an Enden beider Ausgangswellen des Getriebes. Die Lagerbrille kann in einem elektrischen Kraftfahrzeug mit Einzelradantrieb im Doppelgetriebe eines Antriebsstrangs zum Einsatz kommen.

## Beschreibung

Die vorliegende Erfindung behandelt eine Lagerbrille mit einer Lochstruktur zur Aufnahme jeweils eines Endes von zwei Antriebswellen, durch die eine vorteilhafte Schmierung im Bereich dieser Wellenenden des Getriebes möglich ist.

In einem Kraftfahrzeug kann eine solche Lagerbrille in einem Doppelgetriebe eines Antriebsstrangs zum Einsatz kommen.

Des Weiteren behandelt die vorliegende Erfindung ein Verfahren zum Schmieren eines Getriebes, insbesondere eines Twin-Getriebes eines Duo-Elektromaschinenantriebsstrangs, bei dem mit einer passiven Schmierfilmverteilung Laufflächen von Zahnrädern und vorzugsweise Getriebelager des Getriebes geschmiert werden.

Mit anderen Worten, die vorliegende Erfindung behandelt eine Lagerbrille nach dem Oberbegriff von Anspruch 1.

Außerdem behandelt die vorliegende Erfindung ein Verfahren zum Schmieren eines Getriebes nach dem Oberbegriff von Anspruch 14.

Die vorliegende Erfindung behandelt auch ein Kraftfahrzeug mit einem Antriebsstrang nach dem Oberbegriff von Anspruch 15.

### Technisches Gebiet

Elektrisch angetriebene Fahrzeuge können derart gestaltet sein, dass wenigstens zwei Räder, z. B. die beiden Räder einer Hinterachse, von einem eigenen Elektromotor angetrieben werden. Der Elektromotor dreht häufig im Vergleich zur gewünschten Raddrehzahl hochtourig (z. B. mit bis zu 15.000 U/min, bei höhertourigen Auslegungen mit bis zu 18.000 U/min oder sogar mit bis zu 20.000 U/min). Aus diesem Grund ist die Drehzahl des Elektromotors zu reduzieren (z. B. durch eine Übersetzung i zwischen 6 bis 9, gegebenenfalls auch durch eine Übersetzung i in einem Übersetzungsbereich von 4 bis 12). Der erste Elektromotor greift an einem Eingangszahnrad eines ersten Übersetzungsgetriebes in das Langsame an. Der zweite Elektromotor greift an ein anderes, zweites Eingangszahnrad eines zweiten, anderen Übersetzungsgetriebes in das Langsame an. Über zwei oder mehr Stufen erfolgt die Übersetzung auf Abtriebswellen, die zugleich die Radhalbachsen des Kraftfahrzeuges sein können. Werden die beiden Getriebe in einem Gesamtgetriebegehäuse verblockt, so können an das Getriebegehäuse jeweils seitlich, d. h. der erste Elektromotor an einer ersten Seite und an einer anderen Seite der zweite Elektromotor, angeflanscht werden.

So gestaltete Antriebsstränge werden sowohl in den Zeichnungen der JP 2016 205 444 A (Veröffentlichungstag: 08.12.2016; Anmelderin: NTN TOYO BEARING CO LTD) als auch in den Zeichnungen der JP 2017 019 319 A (Veröffentlichungstag: 26.01.2017; Anmelderin: NTN TOYO BEARING CO LTD) vorgestellt
Solche Getriebe können als Doppelgetriebe oder auch als Twin-Getriebe bezeichnet werden, weil im Endeffekt zwei voneinander vollständig unabhängige Getriebe zu einer größeren Getriebeeinheit verbunden sind. Aufgrund der beiden vorhandenen Elektromaschinen, die üblicherweise typgleich sind, kann auch von einer Duo-Elektromaschine gesprochen werden.

Mit Hilfe von Motorsteuerungen können beliebige Ansteuerungen, insbesondere in Bezug auf Drehzahl und Drehmoment, der angeschlossenen Räder durchgeführt werden. Umgangssprachlich wird ein solcher Antriebsstrang als elektrisches "torque-vectoring" bezeichnet. Damit lässt sich das jeweilige Raddrehmoment an den getriebenen Rädern des Kraftfahrzeugs stufenlos, insbesondere bei Kurvenfahrten, vorgeben, wodurch die Fahrstabilität des Kraftfahrzeugs verbessert und die Lenkarbeit verringert werden kann. Diese Kategorie Getriebe kann auch als aktives Differenzial bezeichnet werden. Dieser Typ Getriebe erhöht zudem den Wirkungsgrad eines Antriebstrangs eines Kraftfahrzeugs. Bei Kraftfahrzeugen mit nur jeweils einem treibenden Fahrmotor sind hierzu Überlagerungsgetriebe-Bauarten erforderlich. In Anlehnung an die Wirkungsweise können die Getriebe daher auch als mehrfache Einzelradgetriebe bezeichnet werden.

### Stand der Technik

Doppelgetriebe werden häufig im Endeffekt als zwei vollständig getrennte, durch eine gemeinsame Trennwand verbundene Einzelgetriebe entworfen, wie z. B. aus den Zeichnungen der JP 2016 205 444 A (Anmelderin: NTN TOYO BEARING CO LTD; Offenlegungstag: 08.12.2016) und der CN 201 800 514 U (Anmelderin: Anhui Oulin Eletrical and Mechanical Co. Ltd.; Offenlegungstag: 20.04.2011) ersichtlich. Zwar werden die Einzelgetriebe baulich zusammengeschlossen, sie können aber in vielerlei Hinsicht als getrennte, unabhängige Einheiten betrachtet werden.

Eine etwas andere Gehäusestruktur im Vergleich mit den zuvor genannten Offenbarungen wird in den Figuren 1 und 4 der WO 2010/021 413 A2 (Anmelderinnen: Aisin AW Co., Ltd., Toyoto Jidosha Kabushiki Kaisha; Offenlegungstag: 25.02.2010) vorgestellt. An einer Seite weist das Gehäuse eine mittlere Trennstruktur auf, während zu den Abtriebswellen hin das Gehäuse die beiden Teilgetriebe umschließt, aber mittig wieder in sich selbst aufragt. Aufgrund der möglicherweise relativ großen Drehmomente, deren Größenordnung von den tatsächlichen Dimensionierungen der Elektromaschinen abhängen, dürfte bei einer Gehäusestruktur in Übereinstimmung mit der WO 2010/021 413 A2 eine größere Verbindungsstruktur zu erwarten sein, die zum Gewicht des Getriebes wesentlich beiträgt.

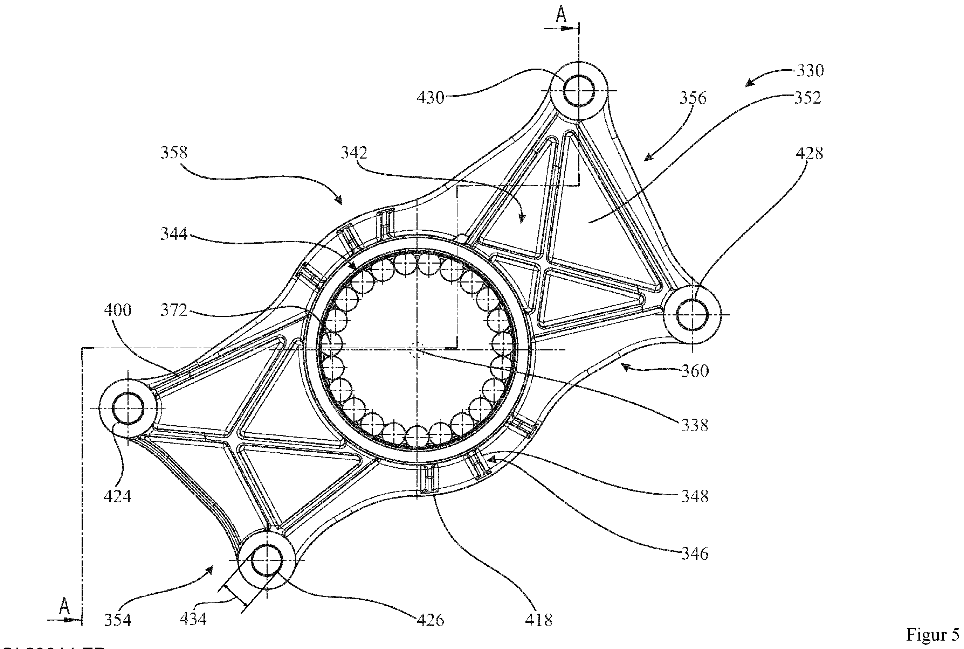

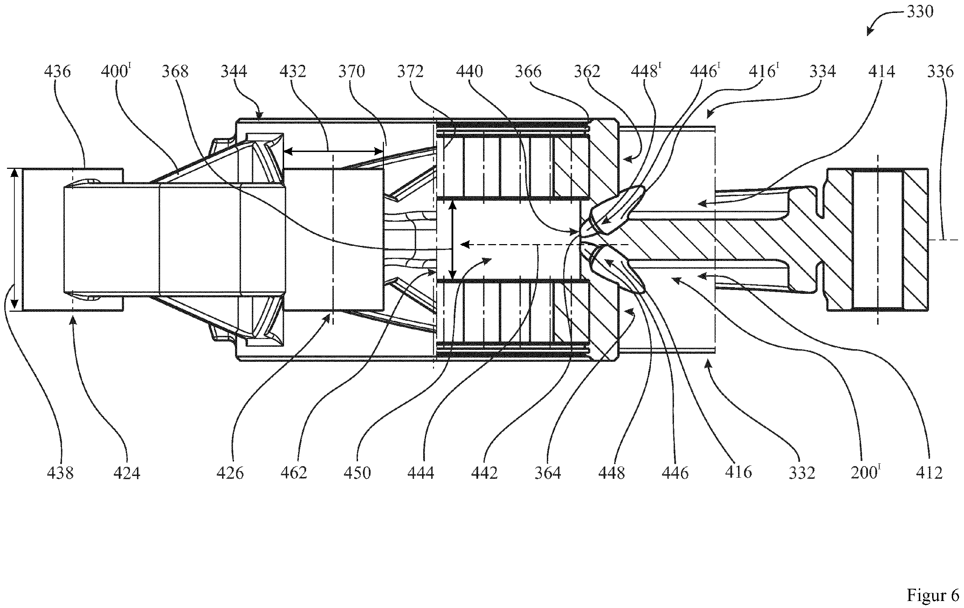

In der WO 2018/121 420 A1 (Anmelderin: BYD Co. Ltd.; Veröffentlichungstag: 05.07.2018) ist ein Doppelgetriebe beschrieben, bei dem beide nebeneinander angeordnete Getriebe über eine Kupplung miteinander koppelbar sind. Das Gehäuse des Getriebes soll aus drei Komponenten zusammengesetzt sein, von denen eine mittlere Komponente in unterschiedlichen Ausführungsbeispielen eingehender beschrieben wird. Diese mittlere Komponente des Gehäuses dient einer zentralen Lagerung von allen Getriebewellen. Figur 5 und Figur 6 sollen ein Ausführungsbeispiel ohne eine Kupplung zeigen. Die übrigen Ausführungsbeispiele beschäftigen sich mit der Gehäusestruktur für die Anordnung der Kupplung. Es soll möglich sein, erste Welle eines ersten Teilgetriebes mit einer zweiten Welle eines zweiten Teilgetriebes zu synchronisieren.

Aus der US 2016/226 289 A1 (Anmelderin: Acrimoto, Inc.; Veröffentlichungstag: 11.08.2016) geht ein duales Antriebssystem für ein Fahrzeug hervor, dessen beide Teilgetriebe voneinander mechanisch entkoppelt sind. Deren Gehäuse umfasst einen zentralen Rahmen, an dem beidseitig Abdeckungen befestigt sind. Der zentrale Rahmen soll auf einer ersten Seite einen ersten Satz Lager für die erste Motorwelle, für die erste Antriebsverbindungswelle und für Zwischenwellen, sowie ein entsprechendes zweites Set auf einer zweiten Seite aufweisen. Ein Flüssigkeitsaustausch zwischen den beiden Getrieberegionen soll zugelassen sein.

Die US 2014/353 052 A1 (Anmelderin: Honda Motor Co. Ltd.; Veröffentlichungstag: 04.12.2014) beschäftigt sich mit einem Fahrzeug, das nach Art eines inventierten Pendels aufgebaut sein soll. Das Fahrzeug weist ein Doppelgetriebe auf, das eine mittig angeordnete Gehäusekomponente hat, in der Wellen gelagert sind. Diese Komponente wird auch als Zwischengehäuse bezeichnet, das zwischen einem linken Halbgehäusekörper und einem rechten Halbgehäusekörper, die durch Bolzen zusammengehalten werden, eingebettet ist.

Weitere interessante Aspekte, die insbesondere die Anordnung von Wellen und Zahnrädern im Getriebe betreffen, können der US 2018/015 815 A1 (Anmelderin: NTN Corporation; Veröffentlichungstag: 18.01.2018) sowie aus der WO 2016/152 454 A1 (Anmelderin: NTN. Corporation; Veröffentlichungstag: 29.09.2016) entnommen werden.

Üblicherweise sind die Getriebe zu schmieren. Je nach Ausgestaltung der Elektromaschinen kann es aber vorkommen, dass die Getriebe zwei Drehrichtungen (Vorwärtslauf/Rückwärtslauf) bewerkstelligen können müssen. Je nach Anwendung werden Elektromaschinen so gestaltet, dass sie als Antriebsmaschinen motorisch oder mitunter auch generatorisch betreibbar sind.

In solchen Getrieben ist also ein besonderes Augenmerk auf die zuverlässige Schmierung des Getriebes zu legen. Vorteilhaft aus energetischen Überlegungen bzw. in wirtschaftlicher Hinsicht sind Getriebe, die ohne eigene Pumpkreise auskommen.

Tauchsumpfschmierungen sind an verschiedenen Stellen eines Antriebsstrangs üblich. Tauchschmierungen sollen energetische Verluste durch Planschen gering halten.

Die DE 10 2014 216 753 A1 (Veröffentlichungstag: 19.03.2015; Anmelderin: BorgWarner, Inc.) und die DE 10 2015 202 711 A1 (Veröffentlichungstag: 27.08.2015; Anmelderin: BorgWarner, Inc.) beschreiben einen Typ Verteilergetriebe, bei denen ein Schmiermittelsammelbehälter, der auch als Fluidaufnahmebehälter bezeichnet wird, Teil eines Vorratsbehältersystems ist, das entfernt von dem Sumpf des Getriebes angeordnet wird. Die DE 10 2014 216 753 A1 führt weitergehend aus, dass das Schmiermittel mit Hilfe einer Sammelplatte gesammelt wird und daher der Fluidaufnahmebehälter einen Luftauslass aufweisen muss, damit im Öl verteilte Luft von dem Öl im Sammelbehälter abgesondert werden kann. Die DE 10 2015 202 711 A1 führt aus, dass das Ölsystem für einen normalen Betrieb und für einen Betrieb mit höherer Drehmomentanforderung zu gestalten sei. Über ein Ventil, das über eine elektronische Steuereinheit betrieben wird, kann eine Freisetzung einer größeren Menge an Schmiermittel durch das Ventil bewirkt werden. Alle vorgestellten Verteilgetriebe basieren auf einer Pumpenförderung des Öls, das gegen ein Sammelelement wie eine Sammelplatte schlagen soll. Wie sich aus der DE 10 2015 202 711 A1 ergibt, ist auch die Verteilung des Öls durch eine elektronische Steuerung einzustellen. Mit anderen Worten, obwohl die DE 10 2014 216 753 A1 die parasitären Energieverbräuche thematisiert, halten beide Druckschriften es für unumgänglich, weiterhin zahlreiche parasitäre Verbraucher zur Aufrechterhaltung der Ölflüsse und der Ölverteilung in einem Getriebe zu verbauen.

Eine hierzu deutlich primitivere Variante der Ölbevorratung eines dreiachsigen Reduziergetriebes ist den Figuren der WO 2017/063 595 A1 (Anmelderin: BEIJING ELECTRIC VEHICLE CO., LTD.; Veröffentlichungstag: 20.04.2017), auch als CN 205 101 518 U und als CN 105 179 650 A veröffentlicht, zu entnehmen, wobei die Wellen in einer Ebene nebeneinander liegen. Es werden eine waagerechte Einbaulage des Getriebes, eine Getriebelage im Fall einer Bergab-Fahrt und ein geänderter Ölstand im Fall einer Bergauf-Fahrt skizziert. Senkrecht angeordnete Stege in einem Sumpf werden gezeigt, wodurch hinter den Stegen Öl zurückgehalten werden kann. Außerdem können Die Stege Löcher für einen Durchfluss im Sumpf aufweisen. Bei einem horizontalen Betrieb des Fahrzeugs soll das Flüssigkeitsniveau immer über dieser sogenannten Separationsanordnung stehen, sodass immer ein Teil des Schmieröls in den statischen Speicherbereich zurückfließt. Das Ganze wird als dynamischer Ölspeicher mit einem zyklischen Öleinlass und einem zyklischen Ölauslass bezeichnet.

In den Druckschriften JP 2009 030 743 A (Anmelderin: Nissan Motor Co. Ltd.; Veröffentlichungstag: 12.02.2009), JP 2009 180 281 A (Anmelderin: Aisin Al Co. Ltd.; Veröffentlichungstag: 13.08.2009), JP 60 215 159 A (Anmelderinnen: Fuji Tekkosho K.K., Nissan Motor Co. Ltd.; Veröffentlichungstag: 28.10.1985), JP 2007 032 797 A (Anmelderin: Toyota Motor Corp.; Veröffentlichungstag: 08.02.2007) und DE 38 19 519 A1 (Anmelderin: Siemens AG; Offenlegungstag: 21.12.1989) sind Getriebe wie Hinterachsgetriebe bzw. Differenzialgetriebe vorgestellt, die eine oben liegende (im Sinne einer Einbaurichtung) Ölwanne aufweisen, in der Öl gesammelt werden kann, das anschließend nach unterschiedlichen Kriterien wie Temperatur oder wie eine Punktverteilung wieder abgegeben werden kann.

Die DE 10 2009 057 458 A1 (Anmelderin: American Axle & Mfg., Inc.; Offenlegungstag: 01.07.2010), auch veröffentlicht als US 2010/144 480 A1, zeigt in einem ihrer hinteren Ausführungsbeispiele ein Achsgetriebe, das entlang einer Welle mehrere Sammelbehälter aufweist, zwischen denen Trennwände die Höhe des jeweiligen Ölraums bestimmen. In den Sammelbehältern kann sich über ein Hohlrad befördertes Schmieröl bis an den Rand des Sammelbehälters ansammeln und wird erst bei kompletter Befüllung des jeweiligen Sammelbehälters mit seinem überschießenden Anteil in den nächsten Sammelbehälter weitergeleitet. Eine solche Vorrichtung kann Schmieröl, das zunächst aus einem Sumpf stammt, am Anfang einer Betriebsphase in die Sammelbehälter abfüllen. Anschließend gelangt das entgegen der Gravitationskraft geförderte Schmiermittel über Kanäle zurück zum Sumpf, wobei sein Rezirkulationsweg auch über zu schmierende Teile des Getriebes geleitet wird.

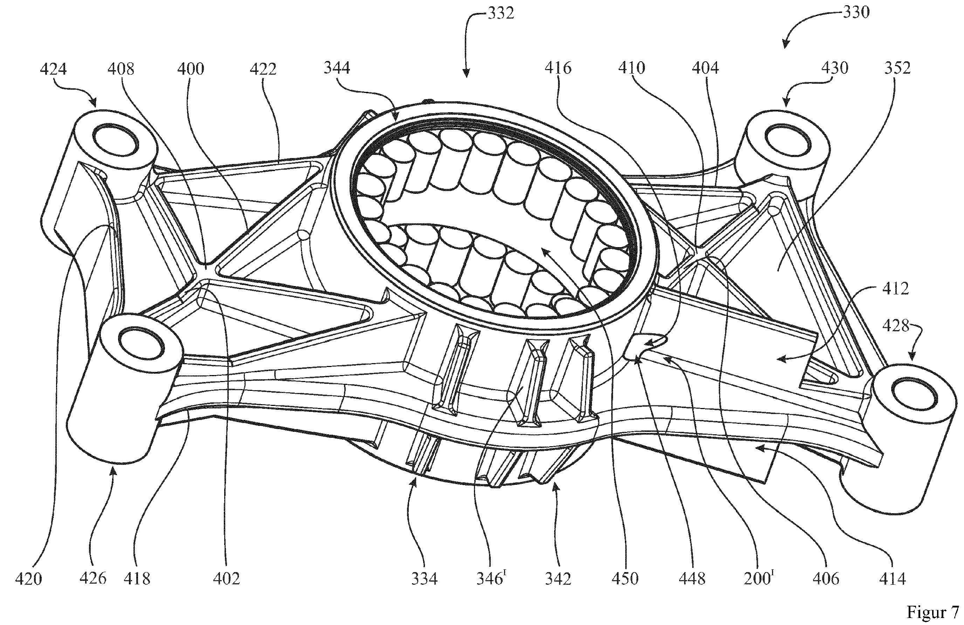

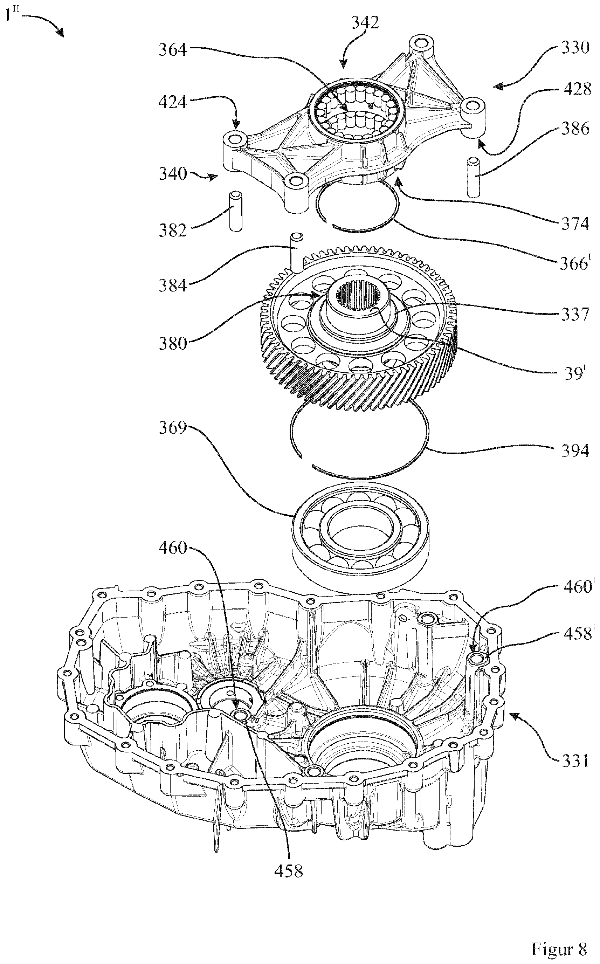

Die Beschreibung der JP 2017-129 205 A (Anmelderin: NTN Toyo Bearing Co. Ltd.; Veröffentlichungstag: 27.07.2017) beschäftigt sich mit einer Antriebseinheit, die einen elektrischen Motor und einen Geschwindigkeitsreduzierer, also ein Getriebe mit ü > 1 umfasst. Die Getriebe weisen jeweils drei Wellen auf wobei, ein Abtriebszahnrad und ein Mittenzahnrad gemeinsam in einem Sumpf planschen. Es wird eine Ölversorgungsplatte erwähnt, die in das Getriebegehäuse einsetzbar sein soll und von der zwei verschiedene Ausführungsformen anhand der Figuren 8 und 11 gezeigt werden. Diese Platte soll dazu dienen, Schmieröl auf eine gewünschte Stelle auftropfen zu lassen, und zwar auf den Eingriffsbereich des kleineren Zahnrads des als Doppelzahnrad ausgebildeten Mittenzahnrads mit dem Abtriebszahnrad, weil das kleinere Zahnrad nicht im Ölbad dreht. Wie in Figur 7 der JP 2017-129 205 A gezeigt ist, kann die Platte mit einem dreieckigem Wandteil ausgebildet sein, das an seiner Spitze eine Tropföffnung aufweist. Es ist keine Weiterleitung in einen benachbarten Bereich für eine Ölrückführung ersichtlich.

In der DE 10 2006 043 723 A1 (Anmelderin: Daimler AG; Offenlegungstag: 27.03.2008) ist eine Allradantriebseinheit beschrieben, bei der der Ölstand eines Hauptgetriebes möglichst konstant gehalten werden soll, damit die Getriebeölpumpe keine Luft saugt. Wie in der Figur 3 der DE 10 2006 043 723 A1 mit eingezeichneten Tropfen angedeutet ist, wird über eine Auswurfsöffnung Öl von einem Abtriebskegelrad in eine Staukammer gefördert. Die Staukammer hat eine dort am Grund vorgesehene Bohrung, über die das Öl in eine Nebenabtriebskammer fließt. Bei der Staukammer könnte zwar ein linker und ein rechter Staukammerbereich unterschieden werden, aber Trennwände fehlen. Die Zahnräder eines Verteilergetriebes sind passiv geschmierte Zahnräder, während aber das gesamte Getriebe als Hauptgetriebe mit einer Getriebeöldruckversorgung beschrieben ist
Die Patentanmeldung JP 2017-129 178 A (Anmelderin: NTN Toyo Bearing Co. Ltd.; Veröffentlichungstag: 27.07.2017) beschäftigt sich ebenfalls mit einem Getriebe für zwei Elektromotoren. Ein Bodenbereich des Getriebegehäuses soll als Schmieröltank dienen. Aus dem Schmieröltank sollen planschende Zahnräder des Getriebes das Öl herauffördern. In diesem Gehäuse gibt es außerdem einen Schmierölspeicher, der sich in dem Gehäuse oberhalb des Schmieröltanks befindet an dem abströmseitig ein Ventil vorgesehen ist, das geöffnet und geschlossen werden kann, um das Reservoir des Schmierölspeichers zuzuschalten. Damit soll Öl dieses Zusatzreservoirs nur aktiv in Phasen besonders hoher Geschwindigkeiten hinzugeschaltet werden. Nach dem Start und während des Betriebs wird das Ventil sonst im geschlossenen Zustand gehalten. Dieser Speicherbereich soll in einer Axialrichtung, d. h. seitlich zu dem Eingangszahnrad angeordnet sein und das mit seinem Bodenbereich unterhalb eines Zentrums der mittleren Wellen liegen. Es ist vorgesehen, dass von dem Ausgangszahnrad auf das Gehäuse gespritztes Öl entlang einer oberen Fläche des Gehäuses den Eingangszahnradwellen zufließen. In jenem Bereich soll sich das Öl dann in dem Schmierölspeicher sammeln.

Weitere interessante Getriebekonfigurationen sind in den folgenden Druckschriften beschrieben:
DD 143 174 A (Erfinder: W. Beyer et al.; Veröffentlichungstag: 06.08.1980),
JP 2005-083 491 A (Anmelderin: Toyota Motor Corp.; Veröffentlichungstag: 31.03.2005).
JP 2014-015 976 A (Anmelderin: Honda Motor Co. Ltd, Yanagawa Seiki Co. Ltd.; Veröffentlichungstag: 30.01.2014),
JP 2014-015 977 A (Anmelderin: Honda Motor Co. Ltd, Yanagawa Seiki Co. Ltd; Veröffentlichungstag: 30.01.2014),
JP 2007-032 797 A (Anmelderin: Toyota Motor Corp.; Veröffentlichungstag: 08.02.2007),
US 2014/155 214 A1 (Anmelderin: Toyota Jidosha Kabushiki Kaisha;
Veröffentlichungstag: 05.06.2014),
JP S60-215 159 A (Anmelderinnen: Fuji Tekkosho:KK, Nissan Co. Ltd.; Veröffentlichungstag: 28.10.1985),
JP 2017-019 319 A (Anmelderin: NTN Toyo Bearing Co. Ltd.; Veröffentlichungstag: 26.01.2017) und
US 3 529 698 B (Inhaberin: General Electric Company; Veröffentlichungstag: 22.09.1970).

Die DE 42 09 980 A1 (Anmelderin: Robert Bosch GmbH; Offenlegungstag: 30.09.1993) beschäftigt sich mit einer reversierbaren Zahnradmaschine, die als Pumpe einsetzbar ist und ein Gehäuse hat. Ein Gehäuseinnenraum der Zahnradmaschine sei durch zwei achsparallele, sich überschneidende Bohrungen zu bilden, sodass dieser Gehäuseinnenraum die Querschnittsform einer Acht erhält. Druckräume zwischen der Wandung des Gehäuses und von Lagerkörpern von Wellenzapfen der Pumpe erstrecken sich über die gesamte Höhe des Gehäuses.

Eine als Zahnradpumpe in der Mobilhydraulik einetzbare hydraulische Zahnradmaschine gemäß der DE 10 2005 056 909 A1 (Anmelderin: Bosch Rexroth AG; Offenlegungstag: 31.05.2007) besitzt eine Zahnradanordnung, die zwei Zahnräder in einem Gehäuse umfasst. Die Zahnräder sollen in Lageraugen zweier einander gegenüberliegend angeordneten Lagerbrillen gelagert sein, wobei die Lageraugen einer Lagerbrille durch eine Leckölnut verbunden sein sollen. Die Offenlegungsschrift beschreibt des Weiteren einen stirnseitig das Gehäuse abdichtenden Deckel mit einer Stirnausnehmung, wobei die Stirnausnehmung über eine Nut mit der Leckölnut der einen Lagerbrille verbunden sein soll, um einen Strömungspfad auszubilden. Eine Achse, auf der eines der beiden Zahnräder anzuordnen ist, soll eine Durchgangsbohrung haben. Über die Leckölnut der Lagerbrille und die Nut des Lagerdeckels soll Lecköl mit einem möglichst geringen Strömungswiderstand einem Tank zugeführt werden, wobei das Lecköl aus einem von der Lagerbrille und einem Wellendichtring begrenzten Wellenraum stammt und über die Durchgangsbohrung und einen externen Leckanschluss fließen soll.

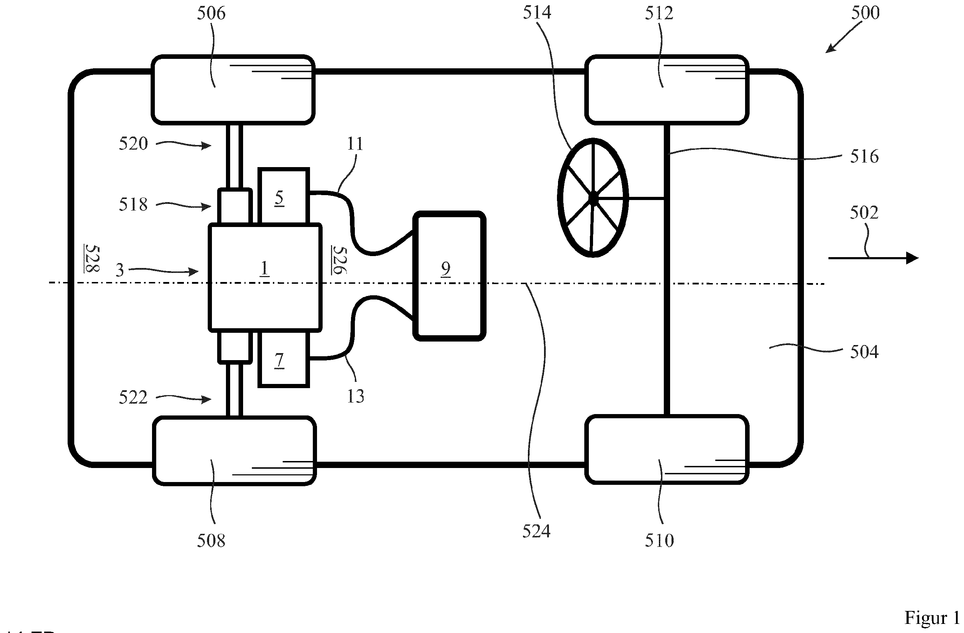

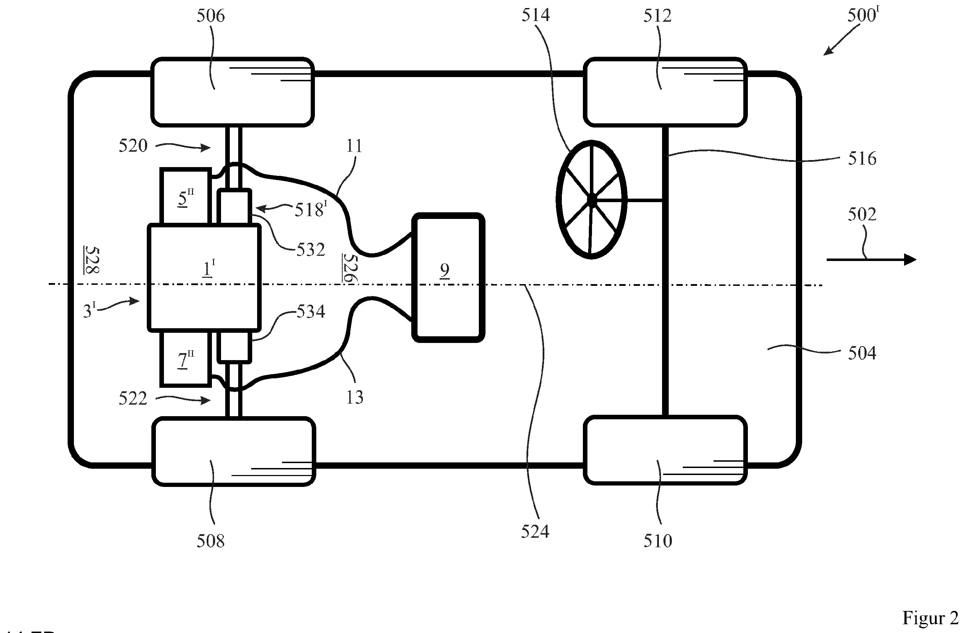

Die WO 2017/138 312 A1 (Anmeldering: NTN Toyo Bearing Co. Ltd.; Veröffentlichungstag: 17.08.2017) beschäftigt sich u. a. mit einer Lagerbeölung in einem Twin-Getriebe, das drei Wellen aufweisen soll, mithilfe von durch ein planschendes Zahnrad verteiltem Öl. In der Figur 5 der WO 2017/138 312 A1 wird ein zentrales Gehäuse gezeigt, das eine Trennwand mit drei Löchern für jeweils ein Lager aufweisen soll. Aus Figur 1 und Figur 2 geht hervor, dass die jeweils paarweise für die drei Wellen des Twin-Getriebes an dem zentralen Gehäuse vorhandenen Lager durch eine Trennwand voneinander separiert sein sollen. An dem zentralen Gehäuse sind eine Vielzahl Ausnehmungen mit Unterteilungen und Schlitzen vorhanden, um in den Ausnehmungen angesammeltes Schmieröl den jeweiligen Lagern zuzuführen.

Die US 2018/328 480 A1 (Anmelderin: Honda Motor Co., Ltd.; Veröffentlichungstag: 15.11.2018) beschäftigt sich mit einem Halter für Gegenlager in einem Gehäuse, der mit Schrauben an einer Zwischenwand des Gehäuses zu befestigen ist. Dieser Halter weist eine Durchgangsöffnung mit einer tassenartigen Einfassung für eine Achse zwischen zwei Lageraufnahmen sowie mehrere Ölführungsbereiche auf.

In den zuvor genannten Druckschriften werden auch allgemein bekannte Zusammenhänge zwischen Getrieben, ihren Zahnrädern und der dazugehörigen Schmierung unter Nutzung der Gravitation erörtert, und dürfen durch Verweis auf die Druckschriften als ebenfalls definiert für vorliegende Erfindung angesehen werden.

### Aufgabenstellung

Es existiert ein Bedarf nach geeigneten Schmierkonzepten, durch die insbesondere Twin-Getriebe möglichst früh, d. h. möglichst zeitnah bzw. von Anfang an ihrer Betriebszeiten ausreichend geschmiert benutzt werden können. Auf der anderen Seite sind exzessive Schmierölmengen nicht zuletzt aus energetischen Überlegungen unerwünscht. Ist die Schmierung einmal ausreichend gegeben, d. h. der Schmierfilm aufgebaut, stellt sich die Frage, welche Schmiermittelmenge denn von dem Getriebe tatsächlich benötigt wird.

Wie ein geeignetes, vorzugsweise kompakt aufgebautes und für lange Betriebszeiten unter wechselnder Last ausgelegtes Getriebe, insbesondere in Bezug auf sein Schmierkonzept mit vorzugsweise Getriebeöl, insbesondere als Teil eines elektrisch angetriebenen Antriebsstrangs, zu gestalten ist, bedarf zahlreicher Überlegungen und Gedanken.

### Erfindungsbeschreibung

Die erfindungsgemäße Aufgabe wird durch eine Lagerbrille nach Anspruch 1 gelöst.

Ebenso wird die erfindungsgemäße Aufgabe durch ein Verfahren zum Schmieren nach Anspruch 14 sowie durch ein Kraftfahrzeug nach Anspruch 15 gelöst.

Vorteilhafte Weiterbildungen lassen sich den abhängigen Ansprüchen entnehmen.

Ein Getriebe umfasst typischerweise Zahnräder, insbesondere Stirnradräder, und Lager, insbesondere Wälzlager, Nadellager oder Kugellager, die mittels eines Schmierfilms, wie z. B. eines Ölfilms, zu schmieren sind. Die Zahnräder befinden sich im Inneren eines der Teilgehäuse des Getriebes. Die Schmierung, vorzugsweise mit Öl, erfolgt vorzugsweise passiv, d. h., der Schmierfilm, im Falle von Öl der Ölfilm, verteilt sich durch ein rotatorisches Fördern und Fortbewegen mittels Zahnrädern (das Planschen). Es kann auch gesagt werden, die Zahnräder ziehen den Schmierfilm mit. Nach einem (längeren) Stillstand, sobald die Zahnräder sich aber wieder drehen, wird der Schmierfilm nach und nach über alle Zahnräder verteilt, insbesondere durch einen Neuaufbau des Ölfilms. Die Zahnräder sind für eine Schmierung durch sich selbst ausgelegt. Die Schmierung findet im Inneren des Getriebegehäuses statt.

Durch die Rotation verschiedener Zahnräder des Getriebes wird das Schmiermittel entlang der Laufflächen des Getriebes bzw. seiner Zahnräder verteilt. Es kann von einer passiven Schmierfilmverteilung gesprochen werden, weil keine aktiven, insbesondere Pumpleistungen umsetzende Komponenten in dem Getriebe verbaut sind, sondern die Zahnräder selbst für den ihre Zähne bedeckenden Schmierfilm und seine Verteilung sorgen.

Eine erfindungsgemäße Lagerbrille weist eine einzige Lochstruktur auf, die jeweils ein Ende zweier Abtriebswellen aufnimmt. Die Lochstruktur ist eine einzige, vorzugsweise zentral angeordnete Durchgangsöffnung in der Lagerbrille. Die Lagerbrille weist Ölzuführflächen auf.

Es handelt sich hierbei um blatt- oder schneidenartige Elemente, die Öl, das auf sie auftrifft, in Richtung der Lochstruktur leiten, so dass das Öl ins Innere der Lochstruktur gelangt, um das dort befindliche Lager zu schmieren.

An einen Ölsammelbereich schließt sich ein Beölungsreservoir an, das in eine Reservoirkammer übergeht.

Die Reservoirkammer mündet über eine Beölungsöffnung oder über eine Beölungsdüse in eine Lagerbeölungskammer der Lochstruktur.

Erfindungsgemäß ist ein Verfahren zum Schmieren eines Getriebes beschrieben, wobei es sich bevorzugt um ein Twin-Getriebe, insbesondere ein Stirnradgetriebe, eines Duo-Elektromaschinenantriebstrangs handelt. Der Schmierfilm wird passiv verteilt. Rotierende Zahnräder des Getriebes ziehen bei der Rotation Schmiermittel mit und verteilen es über sämtliche Laufflächen des Getriebes. Durch die Rotation bewirkte Zentrifugalkraft verspritzt das Schmiermittel.

Besonders vorteilhaft ist es, wenn die Lagerbrille mittig angeordnet ist. Die Lagerbrille liegt sozusagen in der Mitte zwischen zwei Getriebegehäusehalbschalen. Die Lagerbrille ist - unter einem anderen Blickwinkel - das zentrale, mittige Bauteil, das die Einzelgetriebe des Doppelgetriebes voneinander trennt. Die Lagerbrille trennt den Getrieberaum des Doppelgetriebes in eine (in Fahrtrichtung) linke Hälfte und in eine rechte Hälfte. Über eine als Konstruktionshilfe einziehbare Grenzfläche zwischen den beiden Hälften des Doppelgetriebes, auf der sich die Lagerbrille erstreckt, erfolgt ein Durchfluss bzw. ein Austausch von Getriebeöl, aber nicht eine Drehmomentübertragung.

Ein Bauteil, das dem Gehäuse zugerechnet werden kann, ist die Lagerbrille, die aus einer Perspektive heraus als Trennelement der (Teil-)Getriebe betrachtet werden kann.

Aus dem Beölungsreservoir wird mindestens eine Beölungsdüse versorgt, durch deren Beölungsöffnung Öl in einer Axialrichtung bzw. mit einer Richtungskomponente entlang der Axialrichtung abgegeben wird. Unterstützt durch eine Düsenwinkelstellung in Bezug auf die Axialrichtung gelangt Öl beidseitig, d. h. quer zur Axialrichtung, zu den Tonnenlagern. Rotierende Flächen an Enden der Ausgangswellen, die den Zwischenraum begrenzen, fördern zusätzlich die Verteilung von Öl auf die bzw. auf den Tonnenlagern.

Um die eingangs vorgestellte Kategorie von Getrieben weiter zu konkretisieren, kann auch gesagt werden, dass das Getriebe, dessen Getriebegehäuse auf zwei Halbschalen basiert, in deren Inneren vorzugsweise jeweils ein eigenständiges Getriebe realisiert ist, als Pärlingsgetriebe bzw. gepaartes Getriebe, d. h. nahezu zwillingsartig aufgebaut ist; ein weiterer Begriff hierfür ist Twin-Getriebe. Das Twin-Getriebe ist Teil eines Kraftfahrzeug-Antriebsstrangs. Zu dem Kraftfahrzeug-Antriebsstrang gehören zwei Elektromaschinen. Jede Elektromaschine ist unter Nutzung des Getriebes dafür vorgesehen, ein der jeweiligen Elektromaschine zugeordnetes Straßenrad anzutreiben. Von einer Elektromaschine ist der Drehmomentenfluss auf eines der Straßenräder unter Nutzung einer Hälfte des Getriebes vorgesehen.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Die Ölzuführflächen können sich entlang eines Plattenkörpers der Lagerbrille, z. B. von einem Lagerbrillenrand in Richtung eines Lagerbrillenzentrums, erstrecken. Vorzugsweise sind die Ölzuführflächen als Teil einer Stützstruktur bzw. Stegstruktur ausgebildet. Die Lagerbrille kann auch als Einlochtragstruktur bezeichnet werden. Insbesondere verlaufen die Ölzuführflächen schräg. Anders gesagt, es können die Ölzuführflächen ein Gefälle haben, das bis an die Abtriebswellenaufnahmeöffnung heranführt. An ihrem bei der Abtriebswellenaufnahmeöffnung gelegenen Endbereich sammelt sich das Öl, weshalb er auch als Sammelkammer bzw. Ölsammelbereich bezeichnet werden kann.

Anders ausgedrückt, an die Sammelkammer ist eine vorzugsweise trichterförmige Reservoirkammer insbesondere barrierefrei angeschlossen. Wenn hierbei von "angeschlossen" gesprochen wird, so ist damit auch die Möglichkeit ausgedrückt, dass die Kammern in einer einteilig ausgebildeten Lagerbrille vorhanden sind, z. B. als insbesondere durch Metallguss der Lagerbrille ausgeformtes Mehrkammernsystem.

Als gemeinsames Bauteil für beide Ausgangswellen, eine erste Ausgangswelle und eine zweite Ausgangswelle, hat das Doppelgetriebe eine gemeinsame Lagerbrille. Die Lagerbrille stützt über ihre Manschette um ihre ringförmige Innenöffnung die jeweils an einem Ende hineinreichende jeweilige Ausgangswelle ab. D. h., die beiden Ausgangswellen, die insbesondere mit einer jeweiligen Stirnfläche parallel einander gegenüberliegend in der Lagerbrille bzw. deren Öffnung angeordnet sind, wobei vorzugsweise beide Stirnflächen voneinander beabstandet sind, führen aus der Lagerbrille heraus in einen Bereich außerhalb des Gehäuses des Doppelgetriebes. Die Ausgangswellen sind insbesondere zusammen mit den zugehörigen dritten Zahnrädern abstützbar. Es können auch die Lager der Eingangswellen abgestützt sein. Anders gesagt kann die Lagerbrille eine Tragstruktur für zwei Ausgangswellen, zwei Lager, wie Wälzkörperlager oder Rollkörperlager, insbesondere zwei Tonnenlager, sowie zwei drehbare dritte Zahnräder sein, wobei wenigstens eine der zuvor genannten Komponenten zumindest bereichsweise ringförmig umschlossen sein kann.

Die Lagerbrille kann zur Befestigung an ihren Rändern, d. h. in ihren Randbereichen Stiftaufnahmen aufweisen. Eine geeignete Anzahl von Stiftaufnahmen sind z. B. vier Stiftaufnahmen. Hierüber können eingeleitete Momente, die z. B. über die Abtriebswellen eingeleitet worden sind, auf ein die Lagerbrille tragendes Gehäuse, wie z. B. auf das Getriebegehäuse, abgeleitet werden. Momente, die eigentlich auf der Lagerbrille lasten würden, werden so über das Gehäuse, z. B. über seine Teilgehäuse, ausgeleitet. Vorzugsweise rechtwinklig zur Stiftaufnahme hat die Lagerbrille insbesondere ebenmäßige Auflageflächen. Es ist vorteilhaft, wenn die Auflageflächen jeweils Stützflächen in einem Innenbereich der Teilgehäuse gegenüberliegen. Insbesondere können drei oder vier flache, ringartige Auflageflächen an der Lagerbrille vorhanden sein, die gemeinsam Teile einer glatten, geometrischen Fläche bilden. Alle Paare aus Stützfläche und Auflagefläche sind zueinander bis zur Berührung annäherbar. Zwei Auflageflächen der Lagerbrille liegen gespiegelt mit einem festen Abstand einander gegenüber.

Die Lagerbrille zentriert um eine längliche, zylinderförmige Öffnung, in die zwei Wellen, jede von einer Seite der Lagerbrille, eingesteckt werden können. Hierzu hat die Lagerbrille Rollenlager wie Tonnenlager. Die Lagerbrille bietet die seitliche Befestigung für die jeweilige Abtriebswelle.

Die Aufnahmen für die Abtriebswellen befinden sich im Zentrum der Lagerbrille. Die Lagerbrille selbst ist wiederrum an weiteren Gehäusebauteilen angebracht. Hierfür hat die Lagerbrille in ihrem Randbereich Stiftaufnahmen, sodass über Stifte eine Verbindung zwischen Lagerbrille und die Lagerbrille tragenden Gehäuseteile erfolgen kann. Mit anderen Worten dienen Stifte dazu, die Lagerbrille an dem Getriebegehäuse zu fixieren. Die Stifte können beim Betrieb des Getriebes von der Lagerbrille auf Scherung belastet werden. Die Lagerbrille kann ein herausnehmbares Teil des Gehäuses sein. Eine Demontage der Lagerbrille ist möglich, wenn beide Schalen des Getriebegehäuses voneinander getrennt sind.

Die Lagerbeölungskammer wird seitlich von zwei Wälzkörperlagern bzw. Rollkörperlagern, wie zwei Tonnenlagern, begrenzt. Ein Abstand dieser Wälzkörperlager voneinander legt eine Größe der Lagerbeölungskammer in einer Raumrichtung fest. Die Lagerbeölungskammer weist vorzugsweise ein zylinderförmiges Volumen auf. Schmieröl, das sich in der Lagerbeölungskammer sammelt, kann seitlich zu den Wälzkörperlagern abfließen. Von den Wälzkörperlagern gelangt das Schmieröl schwerkraftgetrieben verzögert in den Sumpf zurück. Vorzugsweise wird durch eine Winkelstellung der Beölungsdüse abweichend von einer Gehäuselängsrichtung eine Ausströmrichtung auf ein Lager hin vorgegeben. Die Sammelkammer und die Reservoirkammer sind an der Lagerbrille vorzugsweise paarweise, z. B. beidseitig an dem Plattenkörper der Lagerbrille, vorhanden. Damit wird sichergestellt, dass beständig, d. h. kontinuierlich ohne Unterbrechung des Flusses, ausreichend Öl zu den beiden Wälzkörperlagern gelangt. Außerdem wird ein Ölniveau in dem Sumpf während eines Getriebelaufs niedrig gehalten.

Die Lagerbrille führt aber nicht nur an einem Ende jeweils eine Ausgangswelle, d. h. genauer gesagt, zwei Ausgangswellen über ihre Enden, sondern in einer vorteilhaften Ausgestaltung ist die Lagerbrille zugleich ein Befestigungsrahmen für zwei Tonnenlager. Die Tonnenlager können durch Sprengringe axial begrenzt werden. Die beiden in der Lagerbrille angeordneten Tonnenlager können durch die die Tonnenlager haltenden Sprengringe seitlich begrenzt in Position gehalten werden.

In einer vorteilhaften Ausführungsform werden die Ausgangswellen durch eine einzige Lagerbrille in einem Endbereich der Ausgangswellen gestützt. Die Lagerbrille, deren Bezeichnung als "Brille" daher rührt, dass zwei Ausgangswellen gestützt werden, könnte auch als Lagermonokel bezeichnet werden, weil die Ausgangswellen sich längs gemeinsam auf einer Linie erstrecken, sodass sich deren Radien bei einer Betrachtung senkrecht zur Gehäuselängsrichtung überdecken. Die Lagerbrille weist vorzugsweise eine einzige, insbesondere zentrale, Lochstruktur auf. Die Lochstruktur nimmt vorzugsweise jeweils zwei Abtriebswellen an einem von deren Enden auf. Die Lochstruktur umfasst insbesondere zwei Loslager. Ein Loslager kann jeweils eine Radhalbachse unterstützen, insbesondere wenn eine Welle der Radhalbachse sich bis in das Getriebegehäuse hinein erstreckt. Die Lagerbrille ist vorzugsweise an einer Stützstruktur im Gehäuseinneren befestigt. Zwischen der Lagerbrille und dem Gehäuse müssen keine Dichtflächen vorgesehen werden. Solche Dichtflächen könnten durch mechanische Belastungen im Dauerbetrieb undicht werden. Das Getriebe kann mit einer einzigen Teilgehäuseanschlussfläche ausgestattet sein.

In einer günstigen Ausgestaltung sind in der Lagerbrille zwei Tonnenlager vorhanden. Jedes Tonnenlager ist zur Aufnahme eines Endes einer der Ausgangswellen vorgesehen. Das jeweilige Tonnenlager nimmt eine Ausgangswelle auf. Ein solches Tonnenlager kann im Hinblick auf eine Axialerstreckung als eine äußerste (oder je nach Blickrichtung innerste) Lagerung für eine Radhalbachse bzw. Radantriebswelle bezeichnet werden. Zusätzlich erfolgt eine weitere Lagerung an dem Getriebegehäuse über ein Kugellager, wie ein Rillenkugellager.

Vorteilhaft, ist es, wenn die Lagerbrille über Stifte, die vorzugsweise im Randbereich der Lagerbrille in die Lagerbrille einzuführen sind, an wenigstens einem Teilgehäuse des Getriebegehäuses fixiert ist. Die Lagerbrille wird über die Stifte ortsfest gelagert. Eine solche Lagerung ist kraftschlüssig oder formschlüssig möglich.

In einer günstigen Weiterbildung ist die Lagerbrille eine, insbesondere weil nur durch Stifte gehaltene, herausnehmbare Struktur, die mit einem einzigen zentralen Loch ausgestattet ist. Die Lagerbrille kann auch als Einlochtragstruktur bezeichnet werden. Die Lagerbrille wird über Stifte an dem Getriebegehäuse fixiert. Das Loch in der Lagerbrille ist vorzugsweise mittig der Lagerbrille angeordnet.

Außerdem ist es vorteilhaft, wenn die Lagerbrille über wenigstens eine in ihr integrierte Beölungsdüse Öl an die durch sie getragenen Wellen abgeben kann. Solche eine oder mehrere Beölungsdüsen können so angeordnet werden, dass sie radial Öl in den Raum des einen Loches der Lagerbrille einleiten können. Je nach Fließgeschwindigkeit kann hierbei auch von Spritzen gesprochen werden, d. h wenn ein anliegender hydrostatischer Druck groß genug ist, um einen Strömungsabriss zu einer Tropfenfolge zu unterbinden. Die Beölungsdüse bzw. die Beölungsöffnung wird vorzugsweise aus einem Beölungsreservoir mit Getriebeöl versorgt. In dem Beölungsreservoir sammelt sich Öl durch einen Zufluss von gesammelten Tropfen bzw. Spritzern. Daran schließt sich eine Reservoirkammer an. Spritzöl wird von Zahnrädern u. a. auf Ölzuführflächen geworfen. In einen Sumpf eintauchende Zahnräder fördern beim Planschen Öl in die Höhe und geben es als Spritzer ab. Spritzer können auch Tropfen sein bzw. unter Wirkung der Oberflächenspannung sich zu Tropfen zusammenziehen.

Die Lagerbrille kann auch mit einer Stegplatte verglichen werden. Eine entsprechende Stegplatte kann eine sich aufstülpende, die zentrale Öffnung seitlich begrenzende Struktur sein, die durch das Aufstülpen den Charakter einer Einlochtragstruktur behält.

Es ist vorteilhafterweise vorgesehen, dass nur eine einzige Lagerbrille als Stütze für zwei Enden der Ausgangswelle gestaltet ist.

Die Lagerbrille führt die Ausgangswellen. Dabei ist die Lagerbrille selbst, insbesondere aufgrund ihrer Rollenlager, als Loslager für jede Ausgangswelle ausgestaltet.

Die Lagerbrille sieht - von einer Seite betrachtet - wie eine rechteckige, zu ihren Rändern hin verjüngende Platte aus. Die Platte, die die Lagerbrille darstellt, verjüngt sich - in einer günstigen Ausgestaltung - zumindest zu ihren Rändern hin. In einzelnen Bereichen der Platte stehen Stege hervor, die eine stabilisierende Wirkung auf die Lagerplatte bzw. Lagerbrille haben. Weiter außerhalb ist jeweils ein Antriebszahnrad auf jeder Seite der Lagerbrille anordenbar.

Das Planschen ermöglicht eine Beölung des Getriebes bei Vorwärtslauf sowie bei Rückwärtslauf des Getriebes, also bei einer Umkehr der Drehrichtung. Besonders vorteilhaft ist die Beölung bei einer Lastumkehr, wenn zu beölende Zahnflanken der Zahnräder wechseln. Hierbei kann von vier Betriebsmodi gesprochen werden und zwar Zug vorwärts, Schub rückwärts, Zug rückwärts und Schub vorwärts, für die sowohl im motorischen als auch im generatorischen Betrieb der elektrischen Maschinen die Beölung sichergestellt ist.

Das Getriebe ist aber nicht vollständig mit dem, insbesondere flüssigen, Schmiermittel gefüllt, sondern das gesamte zur Verfügung stehende Volumen (in jedem Teilgetriebe) ist größer als das Volumen, das von dem Schmiermittel im Inneren des Getriebes beansprucht wird. Somit befindet sich zumindest eines der Zahnräder zumindest teilweise in einer Luftumgebung, kann jedoch aufgrund seiner Schmierung und seiner Rotationen von der Luft durch einen Ölschmierfilm getrennt sein.

Im Sumpf befindet sich eine gewisse Menge des Schmiermittels, deren Füllstand nach längeren Phasen des Stillstands des Getriebes am höchsten sein sollte.

Ist der vorgesehene Füllgrad des Getriebes erreicht, d. h., ist die Menge des Schmiermittels in dem Getriebe auf seinem geplanten Niveau (Sollfüllstand), so taucht zumindest ein erstes Zahnrad mit zumindest einem Zahnradbogenabschnitt in diesen Sumpf soweit ein, dass das Schmiermittel an dem eintauchenden Teil des Zahnrades anhaften kann. Besonders interessant ist der Zustand unmittelbar nach einer längeren Stillstandsphase, genau dann, wenn das Getriebe wieder anfängt anzulaufen. Im Stillstand taucht also ein Teil eines ersten Zahnrads, wie ein erstes Stirnzahnrad, in den Sumpf ein.

Neben dem ersten Zahnrad gibt es ein zweites Zahnrad als Teil des Twin-Getriebes. Das erste Zahnrad und das zweite Zahnrad sind für einen Eingriff miteinander vorgesehen; sie bilden zusammen eine Zahnradstufe. Insbesondere umfasst das Getriebe mehr als die eingangs erwähnten beiden Zahnräder.

Neben den Zahnrädern des Getriebes hat das Getriebe ein Mehrkammernsystem. Das Mehrkammernsystem befindet sich in Nachbarschaft zu einzelnen Zahnrädern des Getriebes.

Insbesondere ist es vorteilhaft, wenn das Mehrkammernsystem neben einer Zahnradstufe, vorzugsweise in unmittelbarer Nachbarschaft zu der Zahnradstufe angesiedelt ist, um Schmiermittel bzw. Getriebeöl in Nachbarschaft zu der Getriebestufe vorzuhalten. Das durch das Mehrkammernsystem gebildete Reservoir befindet sich örtlich in Nähe zu wenigstens einer Getriebestufe.

Idealerweise gibt es wenigstens ein Zahnrad in dem Getriebe, das als höchstes Zahnrad (z. B. bezogen auf eine Bodenposition) bezeichnet werden kann. Für das Getriebe gibt es eine (bevorzugte) Einbaulage. Eine der möglichen Lagen des Getriebes ist eine besonders ausgezeichnete Ausrichtung des Getriebes, in der das Getriebe mit Befestigungsmitteln eines Fahrzeugs an diesem befestigt werden kann. Befindet sich das Getriebe in dieser besonderen Lage, so ist das Getriebe in jener Einbaulage. Aufgrund der Gestalt des Getriebes (z. B. aufgrund der Stellen der Befestigungspunkte) ist diesem eine Einbaulage zugeordnet. Wird das Getriebe bei einer (gedanklichen) Positionierung in seiner Einbaulage (z. B. durch eine Schnittbetrachtung) angeschaut, so gibt es Zahnräder, die näher zum Boden hin positioniert sind, und es gibt zumindest ein Zahnrad, das als am nächsten bzw. das Nächste zur bodenabgewandten Seite des Getriebes bezeichnet werden kann. Das zumindest eine bodenabgewandte Zahnrad dient nicht nur zur Kraft- und Drehmomentübertragung, sondern auch zur Weiterförderung des Schmiermittels, insbesondere in Gestalt eines das Zahnrad benetzenden Schmierfilms.

Das als zweites Zahnrad bezeichnete Zahnrad ist Teil einer Zahnradübertragungskette mit mehreren Zahnradstufen. Wie weiter unten erläutert werden wird, ist das Getriebe als Teil eines Antriebsstrangs, dessen Drehmoment(e) aus Elektromotoren zur Verfügung gestellt wird, dafür ausgelegt, eine Reduktion der Drehzahl ausgangsseitig des Getriebes zu bewirken. Über die einzelnen Zahnradstufen wird die Drehzahl von Stufe zu Stufe reduziert. Im Betrieb des Getriebes mit dieser aus mehreren Zahnrädern sich zusammensetzenden Kette einzelner Getriebestufen dreht das zweite Zahnrad mit einer mittleren Drehzahl. Zumindest ein Zahnrad, es können aber auch mehrere Zahnräder sein, ist im Drehmomentenfluss durch das Getriebe ein vorgelagertes Zahnrad. Das mindestens eine vorgelagerte Zahnrad dreht im motorischen Antriebsbetrieb des Getriebes (Zugbetrieb) schneller als das ihm nachfolgende, insbesondere zweite Zahnrad. Nach dem zweiten Zahnrad können weitere Zahnräder im Momentenfluss nachgeschaltet sein, um noch geringere Umdrehungsgeschwindigkeiten bzw. geringere Drehzahlen zu erwirken.

Das zweite Zahnrad kann somit aus verschiedenen Blickwinkeln bzw. aus verschiedenen Betrachtungsweisen heraus beschrieben werden.

Eine Bezeichnungsweise für das zweite Zahnrad orientiert sich an der Einbauposition des Zahnrades in einem Getriebe in Einbaulage. Das zweite Zahnrad ist das vom Boden bzw. von einer Straße am entferntesten anzusiedelnde Zahnrad in dem Getriebe. Gleichartig können die Zahnräder aber auch anhand der (relativen) Drehzahl untereinander bezeichnet bzw. bestimmt werden. Das zweite Zahnrad ist jenes Zahnrad, das nicht mit der höchsten und auch nicht mit der niedrigsten Drehzahl drehen soll, sondern bei dem eine Rotation in einem mittleren Drehzahlbereich (bei Betrachtung aller Drehzahlen aller Zahnräder und einem Vergleich untereinander) erfolgt.

Darüber hinaus dient das zweite Zahnrad zum Abgeben, z. B. durch ein Wegschlagen, durch ein Abscheiden oder durch ein Abstreifen, eines Teils des Schmierfilms, der an dem Zahnrad ausgebildet ist. Das Zahnrad bleibt idealerweise, selbst nach einem Teilabscheiden des Schmierfilms, weiterhin schmierfilmbehaftet, insbesondere solange, wie das Getriebe (rotatorisch) im Betrieb ist. Ein Zuviel an Schmiermittel bzw. Schmieröl kann über das zweite Zahnrad an das Mehrkammernsystem abgegeben werden. Hierzu wird vorteilhafterweise die vorhandene Zentrifugalkraft, wenn das Getriebe ordnungsgemäß arbeitet, genutzt. Eine solche Zentrifugalkraftabscheidung kann mit einem Rechen, einem Abscheideblech oder einem spachtelartigen Schmierfilm- bzw. Öltrenner hergestellt oder gefördert werden. Mit anderen Worten, das zweite Zahnrad übernimmt zusätzlich zu seiner Aufgabe der Schmiermittelverteilung noch die Funktion eines Zentrifugalschmierfilmabscheidezahnrads. Unter Nutzung der Zentrifugalkraft wird das Zahnrad dazu verwendet, einen Teil des Schmiermittels abzuscheiden und in eine Aufbereitungs- und Rezirkulationseinrichtung, die das Mehrkammernsystem zur Verfügung stellt, einzubringen.

Das Mehrkammernsystem ist dafür ausgelegt, das Schmiermittel wieder zurück in den Sumpf zu leiten. Hierbei ist vorgesehen, den zurückströmenden Fluss des Schmiermittels während des Betriebs des Getriebes nicht unterbrechen zu lassen, wenn er einmal zu fließen begonnen hat. Es ist aber eine der Aufgaben des Mehrkammersystems, einen Schmiermittelanteil bzw. ein Quantum Schmiermittel aus der unmittelbaren Schmiermittelversorgung der Zahnräder herauszunehmen. Dies kann durch eine Steuerung der Rezirkulation erfolgen. Ein Ansatz besteht darin, über den Einsatz von wenigstens einem Verzögerungsmittel die Schmiermittelversorgung zu beeinflussen. Das Schmiermittel, bei der Verwendung von Öl als Getriebeschmiermittel also das Öl, genauer gesagt das von dem Zentrifugalschmierfilmabscheidezahnrad in das Mehrkammernsystem eingeleitete Öl, läuft zwar kontinuierlich zurück in den Sumpf, um von dort erneut für die Schmierung der Zahnräder zur Verfügung zu stehen. Das Mehrkammernsystem bietet also einen Strömungspfad für das Schmiermittel. Das Schmiermittel kann entlang des Strömungspfads zurück in den Sumpf gelangen. Aber idealerweise ist, obwohl von einer kontinuierlichen Rezirkulation zu sprechen ist, wenigstens ein Verzögerungsmittel im Strömungspfad vorhanden, sodass (in Bezug auf die Gesamtmenge des Schmiermittels) eine verzögerte Rezirkulation (also in Bezug auf die Gesamtdurchflussmenge) eintreten kann. Ein anfängliches Zurückstauen bzw. Einlagern eines Quantums des Schmiermittels wird durch das Mehrkammernsystem ausgeführt bzw. ermöglicht.

Die durch die Erdbeschleunigung auf das Schmiermittel ausgeübte Beschleunigungskraft wird für einen Rückfluss durch das Mehrkammernsystem in Richtung auf den Sumpf genutzt.

Das Getriebe, das vorteilhafterweise als Twin-Getriebe für den individuellen Antrieb in zwei Antriebssträngen, d. h. für einen getrennten, doppelten Antrieb über das gleiche Getriebe gestaltet ist, umfasst mehrere Baugruppen und Bauteile, u. a. ein Mehrkammernsystem, das vorteilhafterweise wenigstens drei Kammern umfasst. Zu den drei Kammern des Mehrkammernsystems gehören unterschiedliche Kammern (beispielhaft kann die Unterscheidung zwischen den Kammern aus funktioneller Perspektive abgeleitet werden). Es kann auch gesagt werden, die Kammern übernehmen verschiedene Aufgaben in dem Getriebe. Zur Erfüllung seiner verschiedenen Aufgaben besitzt das Kammernsystem mehrere Kammern. Aufgrund der unterschiedlichen Aufgaben und Funktionen der verschiedenen Kammern des Mehrkammernsystems können die Kammern unterschiedlich groß ausgelegt werden. In einer möglichst platzsparenden Ausgestaltung sind die Kammern dafür vorgesehen, möglichst vollständig nach einer initialen Phase des Betriebs mit Schmiermittel ausgefüllt zu werden. Es kann auch gesagt werden, das Mehrkammernsystem hat wenigstens zwei Kammern, die zueinander unterschiedliche Volumina haben. Die Kammern können anhand ihrer jeweiligen Funktion, genauso anhand ihrer Abmessungen und ihrer Schmiermittel aufnehmenden Volumina charakterisiert werden.

Nach einem Start des Getriebes bzw. des Antriebsstrangs fangen die Zahnräder und somit die Komponenten der Zahnradstufen an sich zu drehen. Hierbei ist es aus energetischer Perspektive vorteilhaft, wenn die Schmierfilmverteilung über die Zahnräder nicht durch die Nutzung einer Umwälzpumpe erfolgt, sondern durch ein Mitziehen des Schmiermittels von einem Zahnrad auf das nächste Zahnrad. Dies sollte so lange geschehen, bis alle Zahnräder zumindest in Bezug auf ihre Zahnumläufe mit Schmiermittel bedeckt sind. Für die initiale Phase kann die Benetzung der Stirnflächen der Zahnräder mit einem Schmiermittel, insbesondere mit einem Öl, zurückgestellt werden.

Die Zahnräder sind für Drehungen ausgelegt, bei denen jedes Zahnrad jeweils für einen für ihn eigenen Drehzahlbereich ausgelegt ist. Eines der Zahnräder, insbesondere das im Abtriebsfluss bzw. Momentenfluss an zweiter Stelle angesiedelte Zahnrad, kann als schmiermittelabgebendes Zahnrad genutzt werden. Zum Abgeben kann vorteilhafterweise eine Zentrifugalkraft, die durch die Rotation des Zahnrades auf das Schmiermittel wirkt, genutzt werden.

Der Sachverhalt der Schmiermittelrücklage kann auch wie folgt erklärt werden:
Das Mehrkammernsystem verwahrt im Betrieb des Getriebes eine gewisse Menge Schmiermittel und gibt diese Menge erst nach einiger Zeit wieder zurück in die (Re-)Zirkulation. Die Rotation, insbesondere des zweiten Zahnrades, kann vorteilhafterweise für ein Abscheiden des Schmiermittels unter Nutzung einer Zentrifugalkraft eingesetzt werden. Das abgeschiedene Schmiermittel gelangt (zumindest in Teilen) in das Mehrkammernsystem, genauer in eine erste Aufnahmekammer, die z. B. eine Reservoirkammer ist.

Ein Rezirkulationspfad führt von Kammer zu Kammer. Auf der anderen Seite soll nach einer initialen Betriebsstartphase eine gewisse Menge Schmiermittel aus dem Schmiermittelkreislauf ausgebracht werden. Es kann auch gesagt werden, das Schmiermittel wird ausschließlich verzögert in den Schmiermittelkreislauf zurückgebracht. Diese Verzögerungen können durch eines oder durch mehrere Verzögerungsmittel im Rezirkulationspfad bewirkt werden. Gelangt das Schmiermittel zurück in den Sumpf, so steht es zur erneuten Verteilung über die Zahnräder zur Verfügung. Ein erstes Zahnrad bedient sich permanent aus dem Sumpf des Getriebes und verteilt von Zahnrad zu Zahnrad, genauer von Lauffläche zu Lauffläche der einzelnen Zahnräder das Schmiermittel für eine Oberflächenschmierung der Zahnräder, insbesondere der Zähne der Zahnräder.

Ein Mehrkammernsystem ist in dem Getriebe vorhanden, in welchem das Schmiermittel, insbesondere Schmieröl, verwahrt wird. Das von den Zahnrädern verspritzte Schmiermittel wird von einer Kammer eines Mehrkammernsystems aufgenommen. Anschließend wird es einer weiteren Kammer zugeführt, wo es gespeichert wird. Nur über ein Verzögerungsmittel wird das Schmiermittel in verzögernder Weise erneut in einen Sumpf des Getriebes rezirkuliert, um ein erstes Zahnrad des Getriebes erneut für eine Oberflächenschmierung zu bedecken.

Ein kontinuierlicher Schmiermittelkreislauf kann auch, insbesondere zusätzlich zu dem zuvor beschriebenen Zirkulationspfad, über eine Lagerbrille in einem Getriebegehäuse ausgebildet sein. Die Lagerbrille weist bevorzugt mehrere Kammern auf, die einen Rückfluss des Schmiermittels zurück in den Sumpf verzögern.

Wie sich aus der Beschreibung zu dem Ablauf der Verteilung des Oberflächenschmierfilms ergibt, handelt es sich um ein kontinuierliches Schmierverfahren. Die anfänglich trockenen Zahnräder erfahren innerhalb der ersten wenigen Umdrehungen, idealerweise bereits durch die erste Komplettumdrehung, eine Schmiermittelversorgung ihrer Oberflächen. Ein Zuviel, d. h. ein überschießender Anteil des Schmiermittels, wird über das Mehrkammernsystem zurück zum Sumpf geleitet. Durch ein verzögertes bzw. reduziertes bzw. verlangsamtes Zurückleiten sammeln sich Schmiermittelvolumina in dem Mehrkammernsystem. Das Schmiermittel wird mit geringeren Volumina verzögert in den Sumpf abgegeben. Ein Teil des Schmiermittels verharrt in den Kammern des Mehrkammernsystems. Erst wenn die Zahnräder durch Gravitationseinflüsse trocken stehen, soll das Schmiermittel in dem Mehrkammernsystem wieder zum Sumpf zurückgelangt sein.

Die von dem oder den Verzögerungsmitteln hervorgerufene Verzögerung im Rückfluss des Schmiermittels in den Sumpf sollte sich gleich lange auswirken wie das Trockensetzen der Zahnräder (insbesondere aufgrund des Rückflusses).

Eine Lagerbrille, die als Bauteil eines Doppelgetriebes in diesem vorhanden sein kann, kann um eine Lochstruktur herum existieren. Die Lochstruktur ist im Zentrum der Lagerbrille. Das zentrale Loch, die Lochstruktur, ist zur Aufnahme zweier Enden von Abtriebswellen, d. h. eines Endes einer ersten Abtriebswelle und eines Endes einer zweiten Abtriebswelle, gestaltet.

Eine solche Lagerbrille kann in einem Doppelgetriebe, wie es zuvor vorgestellt worden ist, verbaut sein.

Die Getriebe, die insbesondere als sog. Untersetzungsgetriebe, d. h. als Getriebe mit einer Übersetzung in das Langsame, Teile von elektrischen Antriebssträngen sind, sollen möglichst so ausgelegt sein, dass, insbesondere im Hinblick auf die beschränkte elektrische Speichermöglichkeit im Kraftfahrzeugbau, möglichst die gesamte elektrische Energie für den Antrieb zur Verfügung steht, d. h., möglichst wenig elektrische Energie soll für Nebenaggregate, sonstige Aufgaben oder durch Verlustleistungen "verbraucht werden". Die Eingangswellen des erfindungsgemäßen Getriebes, insbesondere Doppelgetriebes, und die Ausgangswellen des Getriebes sind in einem mittleren Bereich, bezogen auf eine Erstreckung quer zu einer Fahrtrichtung, d. h. insbesondere eine kürzere Strecke von einer Gehäusewand bis zu einer ihr gegenüberliegenden Gehäusewand des Getriebegehäuses, insbesondere auf einer gleichen Höhe liegend, angeordnet. Die Eingangswellen und die Ausgangswellen definieren eine Bezugsebene innerhalb des Getriebegehäuses. Die Position einer mittleren Achse eines der Zahnradzentren ist, ausgewinkelt zu der Bezugsebene, als eine getriebegehäusebodenferne Position vorhanden. Diese Erhöhung der Position der mittleren Achse gegenüber der Bezugsebene bewirkt insgesamt eine Achsanordnung aller Zahnradzentren in der Art eines Dreiecks. In diesem (gedachten) Dreieck ist eine erste Seite, vorzugsweise eine Langseite, wie eine Hypotenuse, vorzugsweise mit der Bezugsebene zur Deckung gebracht. In diesem (gedachten) Dreieck bilden zwei Kurzseiten, eine zweite Seite und eine dritte Seite, die jeweils die erste Seite, insbesondere an jeweils einem Ende der ersten Seite, schneiden, je eine Gerade, wie zwei Schenkel oder wie eine Gegenkathete und eine Ankathete. Geraden, die den Kurzseiten gegenüber der ersten Seite folgen, schneiden mit einer Schräge in einem Wert, der aus dem Winkelbereich zwischen etwa 5° und 70° entnehmbar ist, die Bezugsebene bzw. die erste Seite. Anders gesagt, können die zweite Seite und die dritte Seite jeweils mit der ersten Seite eine (gedachte) Ecke mit einem Winkel ausbilden. Vorteilhaft ist es, wenn ein Winkel aus einem Winkelbereich zwischen 10° und 50° ausgewählt wird. Div. mathematische Simulationen und Berechnungen führten dazu, dass Winkel als ganz besonders vorteilhaft erscheinen, die in einem Winkelbereich zwischen 15° und 48° liegen.

Das Getriebegehäuse wird vorzugsweise mit seiner Gehäuselängsrichtung bzw. Gehäuselängsachse entlang einer Fahrzeuglängsachse, insbesondere parallel zu dieser, vorzugsweise sogar auf der Fahrzeugmittellängsachse angeordnet, in dem Kraftfahrzeug verbaut. Die Eingangswellen und die Ausgangswellen erstrecken sich quer zur Gehäuselängsrichtung, bilden also vorzugsweise einen Winkel von etwa 90° mit der Gehäuselängsrichtung.

Das Getriebegehäuse bietet mehrere Positionen für Zahnradzentren. Zwei Positionen für Zahnradzentren sind durch die Antriebswelle(n) und durch die Abtriebswelle(n) besetzt. Eine erste Position ist durch zwei Eingangswellen des Doppelgetriebes besetzt. Eine zweite Position für Zahnradzentren ist durch die beiden Ausgangswellen besetzt. Zwischen der ersten Position und der zweiten Position befindet sich eine mittlere bzw. dritte Position, die nicht mit den beiden anderen Positionen fluchtet. Diese Position einer mittleren Achse eines der Zahnradzentren ist, ausgewinkelt zu einer von den Eingangswellen und den Ausgangswellen dargestellten Bezugsebene, als eine getriebegehäusebodenferne Position vorhanden. Es kann auch von einer dachfirstartigen Anordnung der mittleren Achse gegenüber einer dachbodenartigen Ebene gesprochen werden. Diese Erhöhung der Position der mittleren Achse gegenüber der Bezugsebene bewirkt insgesamt eine Achsanordnung aller Zahnradzentren in der Art eines Dreiecks.

Aufgrund der Anordnung der mittleren Achse oberhalb der Bezugsebene ist es möglich, die beiden übrigen Wellen und damit die Bezugsebene tief im Fahrzeug anzusiedeln, d. h. näher zum Boden hin. Somit kann der Schwerpunkt des Kraftfahrzeugs tief gelegt werden, z. B. weniger als 50 cm oder sogar weniger als 30 cm vom Boden entfernt. D. h., die elektrischen Maschinen (in der vorliegend betrachteten Betriebsweise als Elektromotoren betrieben), die an den Eingangswellen angreifen und die Eingangswellen antreiben, mit ihren Einzelmassen (aufgrund ihrer Komponenten aus Kupfer) können in einer Höhe (von einer Straße aus betrachtet) im Kraftfahrzeug montiert werden, die der Lage bzw. der Höhe (von der Straße aus betrachtet) der Ausgangswellen entspricht. Damit ergibt sich insbesondere ein stabileres Kurvenfahrverhalten bei einer kompakten Gehäusebauform in Längsrichtung des Getriebegehäuses. Wird die Kurvenfahrt durch ein "torque-vectoring" realisiert oder unterstützt, steigert es die zulässigen Kurvengeschwindigkeiten.

Wie bereits weiter oben schon angeklungen, ist das Getriebe vorteilhafterweise, insbesondere in Gestalt eines Twin-Getriebes, ein passiv geschmiertes Getriebe. Das Getriebe, das von einer elektromotorischen Antriebsquelle angetrieben wird, verbraucht möglichst wenig Energie für Hilfsversorgungen, wie z. B. für die Förderung des Schmiermittels durch eine Schmiermittelpumpe. Stattdessen wird das Getriebe passiv, genauer, durch die Zahnräder selbst und durch den im regulären Betrieb vorhandenen Schmiermittelstand des Schmiermittels, insbesondere des Öls, in dem Getriebe geschmiert. Mit anderen Worten, das Getriebe kann als pumpenfreies Getriebe bezeichnet werden, wenn über den Schmiermittelkreislauf, genauer gesagt, wenn schwerpunktmäßig über den Schmierölkreislauf gesprochen wird. In Bezug auf den Kreislauf des Schmiermittels wie z. B. des Öls ist das Getriebe ein pumpenfreies Getriebe.

Ein Rücklauf des Schmiermittels erfolgt vorteilhafterweise durch Nutzung bzw. aufgrund der Wirkung der Gravitation. Entgegen dieser Gravitationswirkung wird das Schmiermittel über die Zahnradoberflächen der Zahnräder dadurch verteilt, dass die Zahnräder drehen und das Schmiermittel von der vorangegangen Zahnradstufe bzw. von dem vorangegangenen Zahnrad übernehmen.

Aus Klarstellungsgründen sei angemerkt, im Zugbetrieb des Getriebes kann der Schmiermittelpfad zur Verteilung des Schmiermittels über die Zahnräder von dem Drehmomentpfad durch das Getriebe abweichen. In einer positiven Ausgestaltung des Getriebes kann ein im Momentenpfad an letzter Stelle stehendes Zahnrad als Schmiermitteleingangszahnrad genutzt werden. Etwas abstrahierter betrachtet, es lassen sich im Momentenpfad in einem mittleren Bereich angeordnete Zahnräder oder sogar ein im Momentenpfad letztes Zahnrad als zuerst geschmierte Zahnräder nutzen. Hierdurch kann von diesen mittleren Zahnrädern aus oder von dem abtriebsseitig angeordneten Zahnrad aus in Richtung auf die mehr zu den Rändern des Drehmomentenpfads angeordneten Zahnräder das Schmiermittel durch die Rotation und den gegenseitigen Zahneingriff zwischen Zahnrad und Zahnrad verteilt werden.

Über die Laufflächen zweier Zahnräder des Getriebes wird durch Nutzung der Zahnraddrehungen das Schmiermittel verteilt.

Als Verzögerungsmittel kommen hydraulische Bauteile in Betracht, die ein langsameres oder im Volumen reduzierteres Durchtreten des hydraulischen Mittels, des Schmiermittels bzw. des Getriebeöls bewirken. Solche (hydraulischen) Verzögerungsmittel sind z. B. Düsen, Blenden, Drosseln und Strömungsventile. Durch z. B. Querschnittsverengungen lässt sich ein Abfließen des Schmiermittels verzögern. Das Schmiermittel wird verzögert in der Rezirkulation zurückgeleitet. Eine weitere Möglichkeit zur Verzögerung bieten besondere Verzögerungsstrecken. Z. B. kann über Strömungslängen und Gegendrucksysteme ein passiv betriebenes Verzögerungsmittel realisiert werden. Wie bereits eingangs angesprochen, sind aus Energiespargründen Verzögerungsmittel besonders vorteilhaft, die ohne aktive, insbesondere elektrisch anzusteuernde Funktionsgruppen realisiert sind.

Der Strömungspfad kann für einen permanenten Rückfluss des Schmiermittels nach einer ersten Anlaufphase ausgestaltet sein. Ein Strömungspfad ist ein Weg in dem Getriebegehäuse, auf dem das Getriebeöl schwerkraftgetrieben, vorzugsweise ohne eine Unterstützung durch eine energiegetriebene Fördereinrichtung, von einer höheren Stelle zu einer vorgegebenen, niedrigeren Stelle gelangt. Vorzugsweise verbleibt das Mehrkammernsystem nach Ende eines Betriebs des Getriebes im geöffneten Zustand. Es kann auch von einem passiven Mehrkammernsystem gesprochen werden, wenn zwischen den Kammern kein aktives, d. h. schaltbares Element vorhanden ist. Das Getriebe weist vorzugsweise mindestens einen offenen Rückfluss bzw. Rückflusspfad und/oder mindestens einen offenen Strömungspfad auf. Nach wenigen Rotationen von Getriebezahnrädern kann sich ein beständiger Rückfluss von aus dem Sumpf herausgeschleudertem Öl bilden, wobei auf dem für den Rückfluss vorgegebenen Pfad bzw. den Pfaden reservoirbildende Einrichtungen vorhanden sind. Die reservoirbildenden Einrichtungen verzögern den Rückfluss im Vergleich zu einem Ablauf auf einer direkten Wegstrecke von einem Sammelbereich bzw. einem Auftropfbereich in den Sumpf.

Für die einzelnen Momentenpfade können in dem Getriebe, das sich aus Teilgetrieben zusammensetzt, die insbesondere für unabhängige Drehmomentübertragungen von dem jeweils anderen Teilgetriebe gestaltet sind, eigenständige Übersetzungs-/Getriebebaugruppen vorhanden sein. Mit anderen Worten, das Getriebe kann auch als Verblockung mehrerer Einzelgetriebe, den (sogenannten) Teilgetrieben, betrachtet werden. Idealerweise ist jedes Teilgetriebe (im Wesentlichen) identisch zu einem weiteren Teilgetriebe des Getriebes realisiert. Jedes Teilgetriebe umfasst mehrere Stufen. Zur Reduktion der Drehzahl, mit der die Ausgangswelle des jeweiligen Teilgetriebes dreht, können wenigstens zwei, zur weiteren Reduktion der Drehzahl auch drei oder mehr Stufen vorgesehen sein. Vorteilhaft sind Stirnradzahnräder, aus denen die einzelnen Stufen aufgebaut sind. Zur Steigerung der Integration bzw. zur Förderung der Kompaktheit des Getriebes und seiner Teilgetriebe können Stufenzahnräder vorgesehen sein. In dieser Gestaltung können zwei Stufenzahnräder, oder auch mehr in dem Getriebe vorhanden sein. Eine mögliche Ausgestaltung des Getriebes besteht darin, in jedem Teilgetriebe wenigstens ein Stufenzahnrad verbaut zu haben.

Als Stufen werden in den Getriebe zwei miteinander kämmende oder ineinander eingreifende Zahnräder als Gesamtgruppe zur Bildung der Stufe betrachtet. Bei einer solchen Betrachtungsweise der Teilgetriebe stellt ein Stufenzahnrad, obwohl zwei Zahnräder unterschiedlicher Durchmesser gekoppelt sind, keine eigene Stufe dar.

Werden Aspekte wie Gewicht, Herstellungsaufwand und Bauraum bei der Entwicklung und Gestaltung des Mehrkammernsystems in die Überlegung einbezogen, so ist eine günstige Zahl an Einzelkammern, die zusammen das Mehrkammernsystem bilden, die Zahl 3. Drei einzelne Kammern sind zusammen zu dem Mehrkammernsystem zusammengefasst. Natürlich ist es auch möglich, dass Mehrkammernsystem aus mehr als drei Kammern aufzubauen. Jede Kammer benötigt aber ihre Trennwände, sodass ein Mehrkammernsystem als ein Dreikammernsystem eine größere Anzahl an Kammern-Trennwänden benötigt. Die Trennwände können in einer Gussform für die Herstellung von Gehäusehälften integriert vorgesehen sein.

Werden die unterschiedlichen Verzögerungen und die Liefermengen während der verschiedenen Betriebsphasen und Betriebszustände sowie der zu erwartenden Drehzahlen des Getriebes und seiner Zahnräder berücksichtigt, so ist es vorteilhaft, die Kammern des Mehrkammernsystems in ihren Volumina bzw. in ihren Größen auf die mittlere zu erwartende Durchström- und/oder Reservoirmenge auszulegen. Die Kammern untereinander sind somit nicht alle gleich groß, eine letzte, insbesondere unmittelbar in den Sumpf leitende Kammer, kann z. B. größer gestaltet sein als eine dieser letzten Kammern vorgeschaltete Kammer.

Wie bereits weiter oben angesprochen, hat das Getriebe eine Vorzugsrichtung, die der Einbauorientierung bzw. einer Einbaulage entspricht. Das Getriebe ist für eine ganz bestimmte Einbaurichtung bzw. Einbaulage konzipiert. Die Kammern des Mehrkammernsystems liegen, sofern sich das Getriebe in der Einbaulage befindet, auf unterschiedlichen Höhen oder Niveaus. Eine einzige Kammer des Mehrkammernsystems ist vorteilhafterweise die höchste Kammer. Als höchste oder oberste Kammer kann jene Kammer bezeichnet werden, von der die Gravitationsablaufstrecke, d. h. die durch Gravitation bewirkte Schmiermittelablaufstrecke, die auch über weitere Kammern führen kann, eine längste Strecke (im Vergleich mit anderen Schmiermittelablaufstrecken) ist. Die höchste Kammer kann somit anhand der Gravitationsablaufstrecken bestimmt werden. Eine Gravitationsablaufstrecke liegt insbesondere vor, wenn Öl getrieben durch Gravitationskraft eine niedrigere potentielle Energie einnehmen kann, z. B. indem es von einer Auftreffstelle auf eine Oberfläche oder aus einem Sammelreservoir gravitationsgetrieben ablaufen kann, vorzugsweise bis es wiederum von einem Reservoir aufgenommen wird. Das (re-)zirkulierende Schmiermittel, wie z. B. das Schmieröl, folgt der Gravitation. Unter dem Blickwinkel der Gravitation gibt es eine höchste bzw. oberste Kammer, nämlich jene, die die längste Ablaufstrecke hat, gemessen ab der Ablaufseite einer Kammer. Anders ausgedrückt ist die oberste Kammer am weitesten vom Boden entfernt, wenn das Getriebe eingebaut ist. Diese höchste Kammer kann als Tropf- und Sammelkammer ausgestaltet sein. Die höchste Kammer kann dafür vorgesehen sein, das abzuscheidende Schmiermittel von dem, insbesondere zweiten, Zahnrad aufzunehmen. Weil Zentrifugaleffekte beim Abscheiden des Schmiermittels ebenfalls genutzt werden, kann es positiv sein, die Tropf- und Sammelkammer als Auffangbecken und somit manschettenartig um zumindest eine Seite des für die Abscheidung vorgesehenen Zahnrads zu legen. Zur Konzentration des Schmiermittels in der höchsten Kammer, zum schnelleren Sammeln des Schmiermittels und auch zum Reinigen des Schmiermittels kann die Tropf- und Sammelkammer außerdem mit einem Abscheidemagneten ausgestattet sein. Der Abscheidemagnet kann z. B. an einem Boden der Tropf- und Sammelkammer angeordnet sein. Das Schmiermittel sammelt sich anfänglich am Boden der Tropf- und Sammelkammer. In der Sammelkammer kann sich ein erstes Reservoir von Schmiermittel ausbilden. Metallspäne, Verschmutzungen und magnetisch leitende Teile können über den Abscheidemagnet aus der rezirkulierenden, die Kühlung des Getriebes fördernden Flüssigkeit, die das Schmiermittel ist, herausgebracht werden.

Eine der höchsten Kammer, auch als oberste Kammer bezeichnet, nachfolgende Kammer des Mehrkammernsystems (unter dem Blickwinkel des Strömungspfads) kann als Reservoirkammer, insbesondere als erste oder zweite Reservoirkammer, bezeichnet werden. Aus der Reservoirkammer strömt das Schmiermittel, insbesondere ausschließlich, langsamer ab, u. a. aufgrund einer Hemmung im Strömungspfad, als es von der Tropf- und Sammelkammer einströmen kann. Innerhalb von wenigen Drehungen bzw. Rotationen der Zahnräder des Getriebes sammelt sich Schmiermittel in der Reservoirkammer an. Dieses sich in der Reservoirkammer befindliche Schmiermittel benötigt in einer initialen Phase des Betriebs des Getriebes länger zum Ablauf als zum Ansammeln, insbesondere durch Abscheiden vom zweiten Zahnrad. Auch das verzögerte Abgeben, insbesondere Zurückleiten kann durch Nutzung der Gravitationskraft bewirkt werden. Auch hierfür wird keine weitere Energie zum Steuern verwendet.

Das Verzögerungsmittel, über das die Verzögerung der Rückleitung des Schmiermittels aus der ersten bzw. ggf. zweiten Reservoirkammer einzustellen ist, kann an einer Abgabenseite der Reservoirkammer angesiedelt sein und eine einzige Möglichkeit der Ableitung aus der Reservoirkammer darstellen. Das Verzögerungsmittel ist vorteilhafterweise an der Abgabenseite der Reservoirkammer angeordnet. Somit ist ein Eintritt des Schmiermittels in die Reservoirkammer aus der Tropf- und Sammelkammer in unverzögerter Art und Weise sichergestellt. Erst das Verlassen der Reservoirkammer wird verlangsamt. Somit ist als Sammel- und Aufnahmeraum die sich bildende Gesamtkammer aus Reservoirkammer und Tropf- und Sammelkammer als Speichervolumen vorhanden.

Die Teilgetriebe selbst sind voneinander unabhängig gestaltet. Das bedeutet, die Getriebe bzw. die Teilgetriebe des (Gesamt-)getriebes können jedes für sich unabhängig eine Drehzahl-Drehmomenten-Wandlung durchführen. Räumlich vorteilhaft ist die Anordnung der beiden Teilgetriebe nebeneinander, insbesondere parallel zueinander. Dadurch können gemeinsame Achsen und gemeinsame Wellen genutzt werden. Die Zahnräder können z. B. auf gemeinsam ausgeführten Hülsen lagern. Außerdem ermöglicht eine solche Anordnung, dass ein einziges Mehrkammernsystem für die beiden Teilgetriebe ausreicht. Jedes der Teilgetriebe ist ein mehrstufiges Getriebe, d. h., jedes Teilgetriebe hat eine zwei- oder dreistufige Übersetzungstrecke. Das Getriebe kann auch als zwei- oder dreistufiges Stirnradgetriebe bezeichnet werden. Die Übersetzungsstrecken sind dafür vorgesehen, eingangsseitig höhere Drehzahlen in hierzu im Vergleich ausgangseitig niedrigere Drehzahlen umzusetzen, d. h. zu verringern. Jede der Übersetzungsstrecken ist Teil eines eigenen Antriebsstrangs. Wie bereits weiter oben angesprochen, gehört zu jedem Antriebsstrang eine eigene Elektromaschine. Somit sind zwei Elektromaschinen bei einem Twin-Getriebe vorgesehen.

Bevorzugt handelt es sich um ein Getriebe mit zwei parallel angeordneten, dreistufigen Übersetzungsstrecken, die insbesondere in das Langsame übersetzen. Jede Übersetzungsstrecke ist für einen eigenen Antriebsstrang ausgelegt und weist zwei Anschlüsse auf, an die je eine der beiden Duo-Elektromaschinen zum Antreiben anschließbar ist.

Vorzugsweise ist zumindest ein Zahnrad des Getriebes bzw. des Teilgetriebes ein Stufenzahnrad. In dem Getriebegehäuse können zwei Stufenzahnräder angeordnet sein. Die Teilgetriebe weisen jeweils ein Innenvolumen auf. Zwei räumlich verbundene aber rotatorisch isolierte Teilgetriebe können in einem einzigen Getriebegehäuse angeordnet sein. Das Getriebegehäuse umschließt vorzugsweise ein zusammenhängendes Innenvolumen. Der Sumpf nimmt einen variablen Teil des Innenvolumens ein, wobei dieser Teil proportional zu einer zunehmenden Antriebsgeschwindigkeit des Getriebes abnehmen kann. Eine gleichzeitige, ausreichende Beölung der Teilgetriebe wird sichergestellt.

Unmittelbar vor dem Sumpf des Getriebes kann das Mehrkammernsystem eine weitere, insbesondere in Bezug auf die Einbaulage unterste Kammer haben. Diese unterste Kammer ist ein Vorhof zum Sumpf. Der Vorhof zum Sumpf kann in den Sumpf übergehen, z. B. mit einem dazwischengeschalteten, weiteren Verzögerungselement. Durch die Schaffung eines Vorhofs vor dem Sumpf ist es möglich, mit unterschiedlichen Fühlständen und Niveaus zwischen Vorhof und Sumpf während einer Betriebsphase des Getriebes zu operieren.

Das Mehrkammernsystem kann in einer vorteilhaften Formgebung so gestaltet sein, dass es in seinem Inneren mehrere Kammern aufweist, die Teil der zur Rezirkulation des Öls vorgesehenen Ablaufstrecke sind. Zugleich kann das Mehrkammernsystem so geformt sein, dass es außerhalb seines Mehrkammernsystems auch noch wenigstens eine Vertiefung oder Kammer anbietet, um z. B. ein in dieser Vertiefung liegendes oder drehendes, insbesondere höchstbelastetes Zahnrad in einem (zweiten bzw. eigenständigen) Sumpf zu halten. Ist eine erhöhte Schmierung oder eine Versorgung mit mehr Schmiermittel eines Zahnrades oder einer Zahnradstufe des Getriebes notwendig, so kann eine schmiermittelsammelnde, insbesondere im Äußeren des Mehrkammernsystems angeordnete Vertiefung oder Kammer diese erhöhte Schmiermittelversorgung sicherstellen. Der Spiegel bzw. das Niveau des Schmiermittels im Sumpf und der Spiegel bzw. das Niveau des Schmiermittels in der weiteren Vertiefung, die auch als Zahnradbeölungswanne bezeichnet werden kann, können folglich voneinander abweichen. Das in der Zahnradbeölungswanne laufende Zahnrad übernimmt somit die Aufgabe eines weiteren Planschzahnrades.

Mit anderen Worten, ein erfindungsgemäßes Getriebe kann auch mit mehreren Quellen der Schmierung ausgestattet sein, indem neben einem Sumpf wenigstens ein weiterer Vorratsbereich für ein Schmierfilmverteilen vorhanden ist.

Die zuvor dargestellten Kombinationen und Ausführungsbeispiele lassen sich auch in zahlreichen weiteren Verbindungen und Kombinationen betrachten.

Unter einem weiteren Blickwinkel kann auch gesagt werden, dass das Getriebe eine, insbesondere in einem zentralen Bereich, angeordnete Schmiermittelversorgungstrecke aufweist, die von dem Momentenflusspfad abweichend verläuft. Ein im Momentenflusspfad nachgeschaltetes Zahnrad, sozusagen ein zweites, drittes oder viertes Zahnrad im Momentenfluss, ist eines, das für das Schmiermittel als erstes und somit zentral verteilendes Zahnrad vorhanden ist. Ein für die Einleitung des Momentenflusses in das Getriebe vorgesehenes erstes Zahnrad, über das also der Momentenfluss in das Getriebe eingeleitet wird, kann seinen erhöhten Schmiermittelbedarf aus einer Zahnradbeölungswanne beziehen. Diese Zahnradbeölungswanne ist eventuell das erste Mal, d. h. in einer Anfangsphase, zu befüllen. Anschließend steht das Schmiermittel als weitere Quelle zur Verfügung.

Für eine möglichst schnelle, vollumfassende Schmierung aller Laufflächen aller Zahnräder des Getriebes wird eine in einem mittleren Bereich angeordnete Zahnradversorgung der passiv schmierenden Zahnradschmierung realisiert. Von der Mitte aus wird das Schmiermittel über die übrigen Zahnräder weitergezogen. An den Zahnrädern, die eine erhöhte Schmiermittelversorgung verlangen, können weitere Zahnradbeölungswannen vorgehalten sein. Neben dem eigentlichen Sumpf des Getriebes gibt es somit einen, zwei oder mehr als zwei zu bezeichnende Nebensümpfe. Ist ein solcher Nebensumpf ohne jeglichen Ablauf ausgestaltet, so ist nach einer initialen Befüllungsphase auch das Zahnrad mit einem erhöhten Schmiermittelbedarf ein planschendes Zahnrad.

Besonders materialsparend ist es, wenn Wände der Kammern durch das Getriebegehäuse gebildet werden; zumindest bereichsweise trennende Wände zwischen den Kammern. Eine trennende Wand zwischen zwei Kammern kann durch mindestens ein Trennblech gebildet sein, das in das Gehäuse eingesetzt ist. Vorteilhafterweise sind Trennwände zwischen den Kammern an das Getriebegehäuse, z. B. durch Formguss, angeformt. Aufgrund niedriger mechanischer Belastung können Trennwände, die der Ölführung dienen, blechartig gestaltet sein, d. h. eine Stärke von weniger als 1 Zentimeter aufweisen.

Das Getriebe kann mit anderen Worten auch wie folgt als Doppelgetriebe beschrieben werden. Hieraus gehen zudem weitere sehr interessante und auch vorteilhafte Ausgestaltungsmerkmale hervor.

Das Doppelgetriebe umfasst zwei parallel nebeneinander angeordnete Einzelgetriebe. Die Einzelgetriebe sind vorzugsweise jeweils dazu gestaltet, mehrstufig eine Drehbewegung einer in jedem Einzelgetriebe vorhandenen, elektromotorisch anzutreibenden Welle auf eine Radhalbachse, wie z. B. eine Gelenkwelle, als jeweilige Ausgangswelle, also auf zwei Ausgangswellen, zu übertragen. Die Zahnräder eines jeweiligen Einzelgetriebes können unabhängig von den Zahnrädern des anderen Einzelgetriebes rotierbar sein. Vorzugsweise sind alle Zahnräder in einem zusammenhängenden Raum innerhalb des Getriebegehäuses angeordnet.

Das Getriebe könnte also tatsächlich in ein erstes (Teil-)Getriebe und in ein zweites (Teil-)Getriebe aufgeteilt werden. Das Getriebe besteht sozusagen aus zwei Einzelgetrieben in einem gemeinsamen Getriebegehäuse. Die Einzelgetriebe sind zueinander parallel angeordnet. Die zwei Einzelgetriebe bzw. erstes und zweites (Teil-)Getriebe sind zwei rotatorisch voneinander unabhängige Drehmomentübertragungseinheiten, insbesondere in dem Fall, dass eine Wirkungskopplung über ein jeweils durch das (Teil-)Getriebe antreibbares Rad über einen Fahrweg nicht berücksichtigt wird. Die Einzelgetriebe sind zu einem Doppelgetriebe zusammengefasst.

Über jedes Einzelgetriebe kann über wenigstens zwei Stufen eine Drehbewegung einer anzutreibenden Welle auf eine Ausgangswelle übertragen werden. Jedes Einzelgetriebe ist dazu bestimmt, eine Drehbewegung einer anzutreibenden Welle auf eine (eigene) Ausgangswelle zu übertragen.

Das Doppelgetriebe hat eine erste Ausgangswelle und eine zweite Ausgangswelle. Das Doppelgetriebe hat eine erste anzutreibende Welle und eine zweite anzutreibende Welle. Die beiden anzutreibenden Wellen können voneinander unabhängig betrieben werden.

Jede anzutreibende Welle ist dafür ausgelegt, durch einen Elektromotor angetrieben zu werden. Die Ausgangswellen sind dafür bestimmt, auf Radhalbachsen einzuwirken, die üblicherweise durch Radantriebswellen mit zwei Gelenken, je ein Gelenk in einem Endbereich der Radantriebswelle, realisiert werden. Jede Ausgangswelle treibt (indirekt) eine Radhalbachse bzw. eine zu einem Rad führende Antriebswelle an.

Die Drehbewegung, die von einer anzutreibenden Welle in das Getriebe eingebracht wird, kann über die Ausgangswelle auf wenigstens eines der (Straßen-)Räder aufgebracht werden. Das Getriebe, das ein Doppelgetriebe ist, hat somit eine erste anzutreibende Welle und eine zweite anzutreibende Welle. Je nach Antrieb durch einen elektrischen Motor dreht jede anzutreibende Welle mit ihrer eigenen Drehzahl. Somit hat auch jede Ausgangswelle ihre eigene Drehzahl. Zum Beispiel bei einem Geradauslauf des Kraftfahrzeuges sollten die Drehzahlen der beiden Ausgangswellen bei einem gleichen Rollradius der (Straßen-)Räder möglichst synchron und gleich sein. Bei einer Kurvenfahrt jedoch ist es hilfreich, wenn die Drehzahl der einen Ausgangswelle von der Drehzahl der anderen Ausgangswelle abweicht. Eine Drehzahlsteuerung kann eine Drehzahl zumindest einer der beiden elektrischen Motoren anpassen bzw. nachregeln, damit insbesondere bei unterschiedlichen Rollradien, z. B. aufgrund unterschiedlicher Reifendrücke, kein Drehmoment um eine Fahrzeughochachse entsteht und ein Geradeauslauf gewährleistet ist.

Die beiden Einzelgetriebe, die das Doppelgetriebe bilden, sind parallel zueinander, d. h. nebeneinander angeordnet. Jedes Einzelgetriebe erstreckt sich in einem zusammenhängenden, vom nächsten Raum abgespalteten Raum, der der Raum für das Einzelgetriebe ist. Der Raum befindet sich innerhalb eines Getriebegehäuses. Die Zahnräder des einen Getriebes können mit einer anderen Drehzahl rotieren als die Zahnräder des anderen Getriebes. Die Zahnräder des einen Getriebes sind unabhängig von den Zahnrädern des anderen Getriebes betreibbar bzw. rotierbar.

Das zuvor beschriebene Doppelgetriebe, insbesondere aufgrund der Lagerbrille in dem Doppelgetriebe, schafft eine gute Stütz- und Tragmöglichkeit für die in der Lagerbrille ausmündenden Wellen, insbesondere die Ausgangswellen. Das Doppelgetriebe umfasst zwei eigenständige Eingangswellen, jeweils eine Eingangswelle für eine Seite des Doppelgetriebes. Das Doppelgetriebe umfasst zwei Ausgangswellen, je eine Ausgangswelle für eine Seite des Doppelgetriebes. Die Eingangswellen und die Ausgangswellen ragen aus dem Gehäuse heraus. Die erste Ausgangswelle ragt in die entgegengesetzte Richtung aus dem Gehäuse heraus im Vergleich zu der zweiten Ausgangswelle. Gleichartig ragt die erste Eingangswelle auf einer Seite in das Gehäuse hinein, die von der anderen Seite durch die zweite Eingangswelle durchstoßen wird. Die jeweilige Eingangswelle und die ihr zugeordnete Ausgangswelle sind auf einer gleichen Höhe, d. h. also höhengleich, angeordnet.

Beide Ausgangswellen werden von ein und der gleichen Lagerbrille an sich anschauenden Enden gestützt. D. h. die jeweiligen Stirnseiten einer Ausgangswelle sind einander zugewandt. Die eine Ausgangswelle liegt über die Stirnseite vis-ä-vis zur Stirnseite der zweiten Ausgangswelle. Seitlich eingebrachte Momente in die Achsen können über die Lagerbrille an das Gehäuse abgeleitet werden.

Nachfolgend werden weitere vorteilhafte Ausgestaltungen und Weiterbildungen dargelegt, die für sich gesehen, sowohl einzeln als auch in Kombination, ebenfalls erfinderische Aspekte offenbaren können.

Durch das Gesamtgehäuse kann eine (virtuelle) Spiegelfläche "gezogen werden". Diese Spiegelfläche trennt den Bereich des ersten Einzelgetriebes von dem Bereich des zweiten Einzelgetriebes. Die Spiegelfläche läuft durch die Lagerbrille hindurch. Die Spiegelfläche wird als Spiegelfläche bezeichnet, weil an ihr eine Spiegelung der Zahnräder der einzelnen Stufen vorgenommen werden könnte. Ein Zahnrad des ersten Teilgetriebes bzw. Einzelgetriebes befindet sich gleichartig an der zu der Spiegelfläche gleichweit beabstandeten Stelle in dem Bereich des zweiten Einzelgetriebes.

Vorteilhafterweise werden Stirnradzahnräder als Zahnräder des Getriebes eines Einzelgetriebes verwendet. Das Getriebe ist ein in Fahrtrichtung sich erstreckendes, längs sich ausdehnendes Getriebe.

Die einzelnen Zahnräder der Zahnradstufen greifen ineinander ein; eine Übertragungskette aus Zahnrädern startet an der Eingangswelle und gelangt stufenweise, d. h. von Zahnrad zu Zahnrad, bis in den Bereich der Lagerbrille. Wird die Stufung über die Zahnradstufen in Abtriebsrichtung durchlaufen, so gibt es eine letzte Zahnradstufe, die unmittelbar im Bereich der Lagerbrille vorhanden ist. Die letzte Zahnradstufe mündet in den Bereich der Lagerbrille aus.

Die zuvor dargestellten Kombinationen und Ausführungsbeispiele lassen sich auch in zahlreichen weiteren Verbindungen und Kombinationen betrachten.

In einer Ausgestaltung kann die Lagerbrille eine Breite aufweisen, dass sie zwei Einzelwellen an ihren jeweiligen Enden gleich breit umfasst und so abstützt. Die Lagerbrille hat eine Breite, die mehr als doppelt so breit ist wie eines der Lager für eine der Wellen.

In einer alternativen Ausgestaltung kann die Lagerbrille ebenfalls als Doppellager für zwei Wellen gestaltet sein, wobei die beiden Wellen ineinander, z. B. konzentrisch zueinander, eingreifen, um im Bereich der Lagerbrille einmal als äußere Welle gegenüber der Lagerbrille abgestützt zu sein und einmal als innere Welle im Bereich der Lagerbrille gegenüber der äußeren Welle abgestützt zu sein.

Überdies ist es möglich, die Eingangswelle(n) und/oder die Ausgangswelle(n) als ebenfalls auf z. B. hülsenartige Hohlkörper gelagerte Wellen auszugestalten.

Beispielsweise kann auch in Betracht gezogen werden, mit mehr als vier Lagern, insbesondere mit mehr als zwei Lagerkombinationen, eine Befestigung der Eingangswelle an dem Gehäuse, genauer den Gehäusewannen, vorzunehmen.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 schematisch ein Kraftfahrzeug mit einem elektrischen Antrieb,
Figur 2 schematisch eine abgewandelte Ausführungsform eines Kraftfahrzeugs mit einem elektrischen Antrieb,
Figur 3 einen Querschnitt durch ein Doppelgetriebe,
Figur 4 einen rechtwinklig zu dem Querschnitt von Figur 2 orientierten, zweiten Querschnitt durch das Doppelgetriebe,
Figur 5 eine Draufsicht auf eine Lagerbrille mit eingezeichneter Schnittebene,
Figur 6 eine Querschnittsansicht gemäß Figur 5,
Figur 7 eine perspektivische Ansicht der Lagerbrille und
Figur 8 eine Explosionsdarstellung für eine Anordnung, insbesondere eines Stirnzahnrads als Abtriebszahnrad (vgl. Figur 3), zwischen einer herausnehmbaren Lagerbrille und einem Getriebeteilgehäuse zeigen.

### Figurenbeschreibung

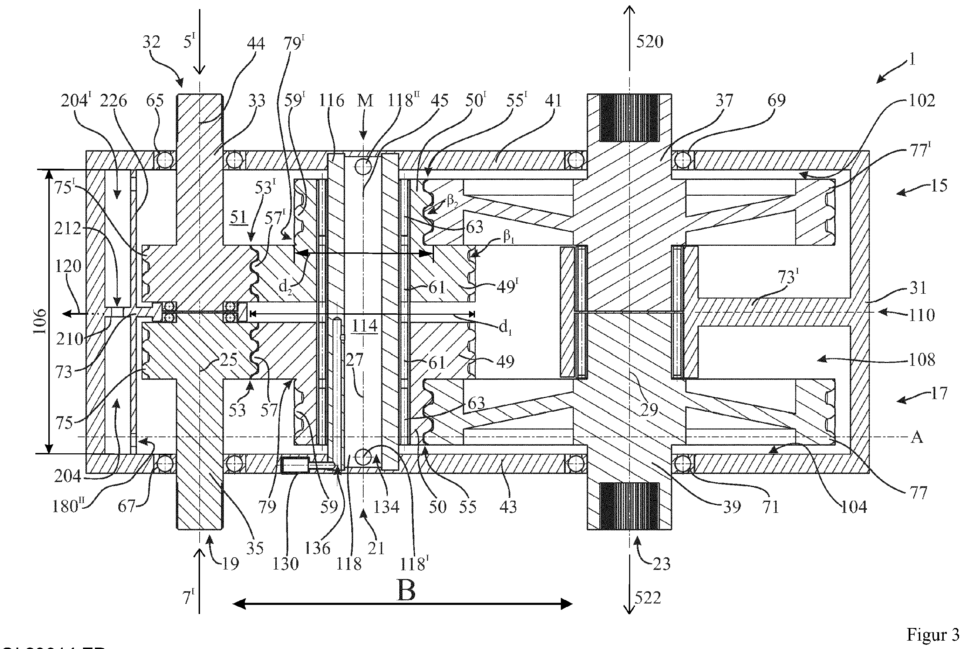

Figur 1 sowie Figur 2 stellen schematisch jeweils ein Kraftfahrzeug 500 bzw. 500^{I} dar, das neben dem Raum für den Fahrer, zu erkennen an dem Lenkrad 514, der auch als Fahrerkabine oder Fahrgastzelle bezeichnet werden kann, einen Fond 526 und einen Kofferraumbereich 528 hat, zu erkennen an der eingezeichneten Fahrtrichtung 502. Im vorderen Teil der Fahrgastzelle ist, wie üblich, das Lenkrad 514, das über ein Lenkgestänge 516, aus einer Lenkwelle, einem Lenkgetriebe, Spurstangen und Radlenkhebeln bestehend, auf zwei Räder als Straßenräder 510, 512 bzw. Fahrzeugräder 510, 512 Lenkbewegungen eines Fahrers übertragen kann. An einer zweiten Achse, der Fahrzeughinterachse 518 bzw. 518', sind zwei weitere Straßenräder 506, 508 angebracht. Die Straßenräder 506, 508 werden über Halbachsen 520, 522 angetrieben. Die Halbachsen 520, 522 können z. B. durch Gelenkwellen realisiert sein. Die Halbachsen 520, 522 sind an einem Doppelgetriebe 1 bzw. 1^{I} abtriebsseitig befestigt. Antriebsseitig an dem Doppelgetriebe 1 bzw. 1^{I} sind eine erste Elektromaschine 5 bzw. 5^{II} und eine zweite Elektromaschine 7 bzw. 7^{II} befestigt. Die Elektromaschinen 5, 7 bzw. 5^{II}, 7^{II} und die Halbachsen 520, 522 sind jeweils paarweise an gleichen Seiten des Getriebes 1 bzw. 1^{I} befestigt. Über jeweils eine Seite wird Drehmoment aus der Elektromaschine 5 bzw. 5^{II} auf eine Eingangswelle 33 (vgl. Figur 3) des Doppelgetriebes 1 bzw. 1^{I} aufgebracht und auf der gleichen Seite des Getriebes 1 bzw. 1^{I} ist die erste Halbachse 520 befestigt, somit der Abtrieb auf das erste Straßenrad 506. In gleicher Weise wird von der Elektromaschine 7 bzw. 7^{II} auf eine Eingangswelle 35 (vgl. Figur 3) des Doppelgetriebes 1 bzw. 1^{I} Drehmoment aufgebracht und auf der gleichen Seite des Doppelgetriebes 1 bzw. 1^{I} ist die zweite Halbachse 522 angeordnet, somit der Abtrieb auf das zweite Straßenrad 508.

Ein besonders vorteilhafter Kraftfahrzeugaufbau liegt vor, wenn die gemäß Figur 1 in Fahrtrichtung 502 vor den Halbachsen 520, 522 montierten Elektromaschinen 5, 7, wie anhand der Elektromaschinen 5^{II}, 7^{II} in Figur 2 gezeigt ist, hinter den Halbachsen 520, 522 montiert sind, z. B. indem das symmetrisch aufgebaute Doppelgetriebe 1 in der gezeigten Ebene des Fahrzeugbodens 504 von Figur 1 um 180° gedreht ist und insbesondere Montagestellen für das Doppelgetriebe 1 bzw. die Elektromaschinen 5, 7 unter dem Kofferraum 528 vorhanden sind. Es kann aber auch, wie in Figur 2 gezeigt ist, in einem Kraftfahrzeug 500^{I} ein Antriebsstrang 3^{I} mit einem Doppelgetriebe 1^{I} aufgebaut sein, dessen Zahnräder (vgl. Figur 3) für eine Kraftübertragung in einer Anordnung der Elektromaschinen 5", 7^{II} hinter einer Hinterachse 518^{I} ausgelegt sind.

Im Bereich des Fahrzeugbodens 504 befindet sich gemäß Figur 1 bzw. gemäß Figur 2 ein elektrischer Akkumulator 9, der über elektrische Leitungen 11, 13 elektrische Energie den Elektromaschinen 5, 7 bzw. 5^{II}, 7^{II} und ihren (nicht gezeigten) Motorsteuerungen zur Verfügung stellen kann. Der Antriebsstrang 3 bzw. 3^{I} erstreckt sich somit von dem Akkumulator 9 kommend über die elektrischen Leitungen 11, 13, über die Elektromaschinen 5, 7 bzw. 5^{II}, 7^{II} und deren Motorsteuerungen, über das Doppelgetriebe 1 und über die Halbachsen 520, 522 zu den Straßenrädern 506, 508. Somit treibt jede Elektromaschine 5, 7 bzw. 5^{II}, 7^{II} je ein Straßenrad 506, 508 an. Es handelt sich um einen Einzelradantrieb.

Das Getriebe 1 bzw. 1^{I} ist auf der Fahrzeuglängsachse 524 angeordnet. Eine Elektromaschine 5 bzw. 5^{II} und eine Halbachse 520 befinden sich auf einer Seite zu der Fahrzeuglängsachse 524, die andere Elektromaschine 7 und die andere Halbachse 522 sind seitengleich auf der anderen Seite zur Längsachse 524 angeordnet. Die gemäß Figur 1 quer zur Fahrzeuglängsachse 524 rotierende, zentrumsnah angeordnete Elektromaschine 5 bzw. 7 dreht das Getriebe 1, damit abtriebsseitig ebenfalls quer zur Fahrzeuglängsachse 524 eine Ausgangswelle 37, 39 (vgl. Figur 3) ein Drehmoment auf ein Rad 506 bzw. 508 aufbringen kann. Die gemäß Figur 2 quer zur Fahrzeuglängsachse 534 rotierende, kofferraumnah angeordnete Elektromaschine 5^{II} bzw. 7^{II} dreht das Getriebe 1', damit abtriebsseitig ebenfalls quer zur Fahrzeuglängsachse 524 eine Ausgangswelle 37, 39 (vgl. Figur 3) ein Drehmoment auf ein Rad 506 bzw. 508 aufbringen kann. Wie in Figur 1 bzw. Figur 2 dargestellt, ist für eine solche Antriebsverbindung die Elektromaschine 5, 7 bzw. 5^{II}, 7^{II} an die Eingangswelle 33, 35 (in Figur 3 dargestellt) durch eine Koppelung 532, 534 angebracht. Das Getriebe 1 bzw. 1^{I} und die Elektromaschinen 5, 7 bzw. 5^{II}, 7^{II} sind gekoppelt.

Das in Figur 1 bzw. Figur 2 gezeigte Fahrzeug 500 bzw. 500^{I} wird über seine Fahrzeughinterachse 518 bzw. 518^{I} angetrieben. Es handelt sich um einen elektrischen Hinterachsantrieb mit Hilfe des Doppelgetriebes 1 bzw. 1^{I}. Das Doppelgetriebe 1 bzw. 1^{I} ist im Bereich des Fonds 526 bzw. im Bereich des Kofferraums 528 und dort im Bereich des Fahrzeugbodens 504 angeordnet.

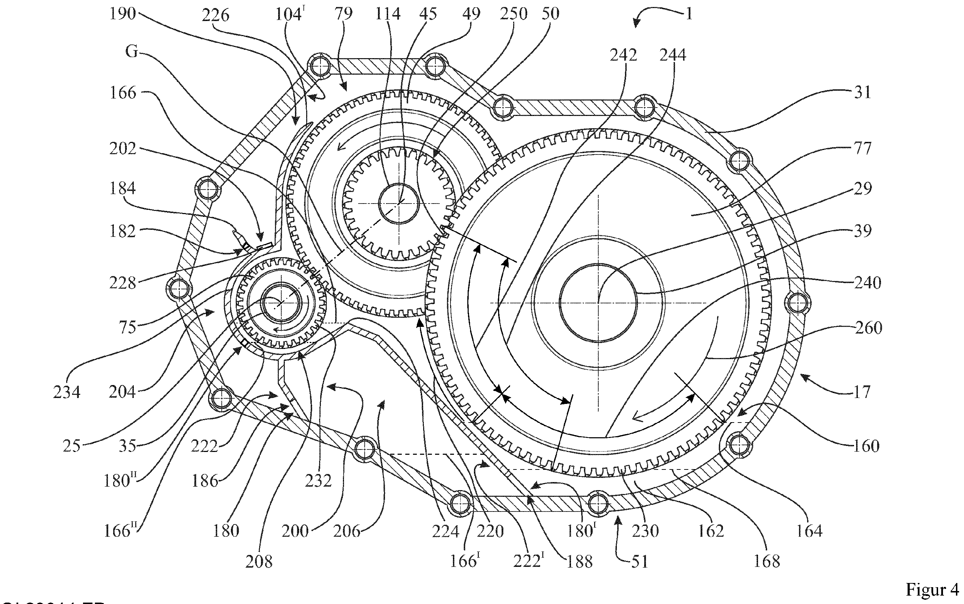

Nachfolgend werden vorrangig an den Figuren Figur 3 und Figur 4 interessante Aspekte zu dem Doppelgetriebe 1 erläutert. Besonders hilfreich ist es, beide Figuren Figur 3 und Figur 4 gemeinsam mit dem nachfolgenden Text zu betrachten. Die Figuren 5 bis 8 sind ergänzend zu den nachfolgenden Ausführungen hinzuzunehmen, weil aus diesen ebenfalls vorteilhafte Aspekte bzw. Komponenten und Anordnungen hervorgehen, gemäß denen ein Getriebe weitergebildet werden kann.

Das Getriebe 1 ist in Figur 3 in einer Schnittansicht dargestellt, bei der der Schnitt durch die einzelnen Zahnradzentren 25, 27, 29 geführt ist.

Das in Figur 3 detaillierter dargestellte Doppelgetriebe 1 ist, wie bereits weiter oben angesprochen, in Figur 1 in einer Einbaulage auf der Fahrzeuglängsachse 524 eines Fahrzeugs, wie dem Fahrzeug 500, zum individuellen Antrieb von zwei Rädern 506, 508 angeordnet dargestellt. Das Doppelgetriebe 1 bildet so einen Teil eines elektrisch angetriebenen Kraftfahrzeugs 500, genauer seines Antriebsstrangs 3. Das Getriebe 1^{I} von Figur 2 kann wie ein Getriebe 1 gemäß Figur 3 oder wie ein Getriebe 1^{I} gemäß Figur 8 ausgebildet sein, wobei das Getriebegehäuse jeweils Befestigungsstellen für eine kofferraum nahe Montage aufweist (nicht dargestellt).

Wie die Figur 3 zeigt, weist das Doppelgetriebe 1 zwei Einzelgetriebe 15, 17 auf, wobei jedes Einzelgetriebe 15, 17 als zweistufiges Stirnradgetriebe ausgebildet ist. Jedes Stirnradgetriebe weist drei Positionen 19, 21, 23 für Zahnradzentren 25, 27, 29 in einem einzigen, gemeinsamen Getriebegehäuse 31 auf. Ein Antriebsdrehmoment 5^{I}, 7^{I} wird von den Elektromaschinen 5, 7 (s. Figur 1) auf die jeweilige Eingangswelle 33, 35 aufgebracht. Die mit den jeweiligen Elektromaschinen 5 und 7 (vgl. Figur 1) verbundenen Eingangswellen 33, 35 und die mit den jeweiligen Halbachsen 520 und 522 verbundenen Ausgangswellen 37 und 39 sind in einem mittleren Bereich M, bezogen auf eine Quererstreckung, d. h. insbesondere eine kürzere Strecke von einer Gehäusewand 41 bis zu einer ihr gegenüberliegenden Gehäusewand 43 des Getriebegehäuses 31 auf einer gleichen Höhe liegend angeordnet. Die Lage der Eingangswellen 33, 35 und der Ausgangswellen 37, 39, die die Zahnradzentren 25 und 29 definieren, beschreibt eine Bezugsebene B innerhalb des Getriebegehäuses 31. Eine mittlere Achse 45, welche das Zahnradzentrum 27 oder eine Position beschreibt, die ein mittleres Zahnradzentrum ist, ist abgewinkelt bzw. erhöht zu der Bezugsebene B und bildet eine getriebegehäusebodenferne Position des Zahnradzentrums 27.

Die beiden Eingangswellen 33, 35 sind zu einer Doppel-Eingangswelle 32 zusammengefügt. Sie sind mechanisch zu der Doppel-Eingangswelle 32 verbunden. Die beiden Eingangswellen 33, 35 erstrecken sich entlang der Achse 44 und bilden auf diese Art und Weise die Doppel-Eingangswelle 32. Die beiden koaxial angeordneten Eingangswellen 33, 35 sind relativ zueinander verdrehbar miteinander verbunden.

Die mittlere Achse 45 ist hierbei über eine, das Zahnradzentrum 25 oder 29 und die mittlere Achse 45 verbindenden Gerade G (siehe Figur 4) schneidbar, und zwar in einem Winkelbereich von etwa 5° bis 70° bezogen auf eine als Konstruktionshilfe gedachte Verbindungslinie zwischen den Zahnradzentren 25 und 29.

Wie ebenfalls aus Figur 3 entnommen werden kann, ergibt sich in Abhängigkeit von den von den Zahnrädern 75, 75^{I} der Eingangswellen 33, 35, von den Zahnrädern 77, 77^{I} der Ausgangswellen 37, 39 und von den Zahnrädern 49, 49^{I}, 50, 50^{I} der auf der mittleren Achse 45 gewählten Verzahnungsgeometrien und von den zu übertragenden Leistungen, wie die Zahnradzentren 25, 27, 29 anzusiedeln sind. Aufgrund des Antriebs durch die Antriebsdrehmomente 5^{I}, 7^{I} stellen die Zahnräder 75, 75^{I} die ersten Zahnräder im Momentenfluss durch das Getriebe 1 dar.

Das jeweilige eingangswellenseitige Zahnrad 75, 75^{I} eines jeden Einzelgetriebes 15, 17 treibt ein jeweiliges Zahnrad 49, 49^{I} auf der mittleren Achse 45 an. In dem gezeigten Ausführungsbeispiel sind die Drehrichtungen der Elektromaschinen 5, 7 (vgl. Figur 1) im Zugbetrieb des Fahrzeugs so gewählt, dass das Zahnrad 49, 49^{I} einen von dem Gehäuseboden 51 des Getriebegehäuses 31 wegdrehenden Rotationssinn nach einer Zahnradberührung in antreibender Weise hat.

Wird abweichend zu dem in Fig. 1 gezeigten und in diesem Zusammenhang beschriebenen vorteilhaften Kraftfahrzeugaufbau ein Kraftfahrzeugaufbau mit einer Getriebeanordnung wie in Figur 2 gezeigt ist realisiert, bei dem die Getriebeanordnung um 180° im Vergleich mit der Getriebeanordnung in Figur 1 gewendet ist, so würde sich bei dem Zahnrad 49, 49^{I} ein zu dem Gehäuseboden 51 des Getriebegehäuses hin drehender Rotationssinn nach einer Zahnradberührung einstellen.

Gemäß Figur 3 ist in einem Einbauzustand eines Getriebegehäuses 31 des Getriebes 1 in einem Kraftfahrzeug (siehe Kraftfahrzeug 500 bzw. 500^{I} in Figur 1 bzw. Figur 2) die Gehäuselängsrichtung 120 parallel zu der Fahrzeuglängsachse (siehe Fahrzeuglängsachse 524 in Figur 1 bzw. Figur 2) ausgerichtet. Das Getriebegehäuse 31 weist in seiner Gehäuselängsrichtung 120 eine größere Erstreckung auf als in seiner Breite 106.

Wie insbesondere die Fig. 3 verdeutlicht, ist die die mittlere Position oder das mittlere Zahnradzentrum 27 definierende Achse 45 als gehäusefeste, ruhende Achse ausgebildet. Dies ermöglicht eine Aussteifung des Getriebegehäuses 31, ohne dass zusätzliche Bauelemente erforderlich wären. Das jeweilige angetriebene Zahnrad 49, 49^{I} auf der Achse 45 und das treibende Zahnrad 50, 50^{I} sind über jeweils zwei Nadellager 61, 63 auf der Achse 45 gelagert, um ein Kippen der Zahnräder 49, 49^{I}, 50, 50', die im Übrigen vorzugsweise als einstückiges Stufenrad gebildet sind, zu vermeiden.

Die Eingangswellen 33, 35 und die Ausgangswellen 37, 39 sind hingegen mit Wälzlagern 65, 67, 69 und 71 in Außenwänden des Getriebegehäuse 31 gelagert. Ferner sind die Eingangswellen 33, 35 im Nahbereich einer Gehäusezwischenwand 73, die Durchbrüche, wie den Durchbruch 212, zur gemeinsamen Schmierung der Einzelgetriebe 15 und 17 aufweist, mittels Kugellagern gelagert. Eine Wandstütze 210, ausgebildet als Teil der Gehäusezwischenwand 73, bildet eine Verbindung zum Getriebegehäuse 31. Die Ausgangswellen 37 und 39 sind in einer zweiten Gehäusezwischenwand 73^{I}, genauer einer Lagerbrille, mittels Nadellagern (ohne Bezugszeichen) bzw. jeweils einem Nadellager je Einzelgetriebe 15, 17 gelagert.

Wie durch Blick in Figur 4 an dem darin gezeigten Teilgetriebe 17 besonders gut zu erkennen ist, sind die Eingangswelle 33 und die Ausgangswellen 39 in Bezug auf den Gehäuseboden 51 des Getriebegehäuses 31 niedriger angeordnet als die Achse 45.

Die Stufenzahnräder, wie das Stufenzahnrad 79 auf der Achse 45 (siehe Figur 3) weisen einen ersten, größeren Durchmesser d₁ auf der Antriebsseite und einen kleineren, zweiten Durchmesser d₂ auf der Abtriebsseite auf. Es liegt eine Untersetzung zur Abtriebsseite hin vor.

Die zwei Zahnräder 49, 50 sind zu einem Stufenzahnrad 79 zusammengefügt. Es kann auch gesagt werden, dass die zwei Zahnräder 49, 50 bzw. 49^{I}, 50^{I} zu einem Stufenzahnrad 79 bzw. 79^{I} zusammengeschweißt sind Entsprechend ist ein zweites Zahnradpaar 49^{I}, 50^{I} als Stufenzahnrad 79^{I} montiert. Je nach Zählweise können zueinander drehfest angeordnete Zahnradpaare 49, 50; 49^{I}, 50', wie das Stufenzahnrad 79, als zweite Zahnräder oder als zweite (50, 50^{I}) und dritte Zahnräder (49, 49^{I}) bezeichnet werden.

Es ergibt sich in dem erfindungsgemäßen Doppelgetriebe 1, wie in Figur 3 gezeigt ist, eine erste Getriebestufe 53 bzw. erste Übersetzung 53, die eine von dem Gehäuseboden 51 des Getriebegehäuses 31 sich wegwendende Übersetzung bildet und eine zweite Getriebestufe 55 bzw. die zweite Übersetzung 55, die eine auf den Gehäuseboden 51 sich zuwendende Übersetzung bildet. Andererseits schafft die Zahnradpaarung aus den ersten beiden Zahnrädern 75^{I}, 49^{I} im Momentenfluss des Getriebes 1 die Übersetzung 53^{I}. Die Zahnradpaarung aus den dann folgenden beiden Zahnrädern 50^{I}, 77^{I} schafft die Übersetzung 55^{I}.

Wie insbesondere die Figur 3 in einem schematischen Längsschnitt durch das Doppelgetriebe 1 zeigt, sind die mittleren, einstückig miteinander gebildeten Zahnräder 49, 50 bzw. 49^{I}, 50^{I} für eine querkraftfreie Übertragung eines Drehmoments gestaltet, indem die Zähne 57 und 59 bzw. 57^{I} und 59^{I} zweier benachbarter Zahnräder 49, 50 bzw. 49^{I}, 50^{I} mit für jede Zahnreihe verschieden ausgebildeten Schrägungswinkeln, wie die Schrägungswinkel β₁ und β₂, versehen sind. Die Schrägungswinkel β₁, β₂ sind in der gezeigten Schnittebene von Figur 3 lediglich schematisch angedeutet. Die Zähne 57, 59 in dem Teilgetriebes 17 sowie benachbarte Zähne der jeweiligen Zahnreihen (ohne Bezugszeichen) erstrecken sich mit jeweiligen Zahnrichtungen parallel durch die Schnittebene von Figur 3 hindurch. Die Zähne 57, 59 bzw. deren Laufflächen erstrecken sich bezüglich einer vorgegebenen bzw. gewählten Richtung der mittleren Achse 45 mit einer Zahnrichtung gleichartig seitlich hin zu dem anderen Teilgetriebe 15 bzw. weg von dem anderen Teilgetriebe 15, wobei eine durch Vektoren ausdrückbare Abweichung der Zahnrichtungen der Zähne 57, 59 von der Richtung der mittleren Achse 45 ein gleiches Vorzeichen aufweist (identisches Vorzeichen in den Schrägungswinkeln.

Für die Zahnräder 49^{I}, 50^{I} bzw. die Zähne 57^{I}, 59^{I} des anderen Einzelgetriebes 15 gilt aufgrund eines gleichartigen Aufbaus von Getriebeteilen entsprechendes, d. h., das Teilgetriebe 15, das gleichartig wie das Teilgetriebe 17 aufgebaut ist, weist benachbarte Zahnräder 49^{I}, 50^{I} auf, die entsprechend mit einer Schrägstellung der Zähne 57^{I}, 59^{I} ausgebildet sind. D. h. für die Zahnräder 49^{I}, 50^{I} bzw. die Zähne 57^{I}, 59^{I} des anderen Einzelgetriebes 15 gilt aufgrund eines gleichartigen Aufbaus von Getriebeteilen das zuvor Beschriebene in entsprechender Weise.

Die Zahnräder 49, 50 bzw. 49^{I}, 50^{I} sind zumindest im Zugbetrieb des Fahrzeugs frei von Axialkräften.

Es kann vorteilhaft sein, zur Abstützung der Zahnräder 49, 50 bzw. 49^{I}, 50^{I} an dem Getriebegehäuse 31 Anlaufscheiben vorzusehen.

Ferner kann es zur Belüftung des Getriebegehäuses 31 vorteilhaft sein, anstatt einer massiv ausgestalteten mittleren Achse die mittlere Achse 45 als Hülse oder zusätzlich auf der mittleren Achse 45 eine Hülse vorzusehen, die einen Druckausgleich des Getriebegehäuses 31 ermöglicht.

Die Zahnräder 49, 49^{I}, 50, 50^{I}, 75, 75^{I} und 77, 77^{I} sind wegen der hohen, zu übertragenden Drehmomente als Scheibenräder gebildet. Wie Figur 3 zeigt, sind die ausgangswellenseitigen Zahnräder 77, 77^{I} mit einer Scheibe gebildet, die eine geringere Stärke aufweist, als die Breite ihres Zahnkranzes. Zudem ist die jeweilige Scheibe der Zahnräder 77, 77^{I} zu der jeweiligen Ausgangswelle 37, 39 angewinkelt. d. h., sie kann mit einem von dem senkrechten Winkel verschiedenen Winkel zu der jeweiligen Ausgangswelle 37, 39 ausgebildet sein. Die Scheibe weist eine Basis mit einer Stirnfläche auf, die sich radial von der Ausgangswelle 37, 39 erstreckt bzw. in die Ausgangswelle 37, 39 übergeht und insbesondere eine Lauffläche eines Nadellagers in einer Axialrichtung begrenzt.

Alle in dem Getriebegehäuse 31 verbauten Zahnräder 49, 49', 50, 50', 75, 75', 77, 77', Achsen und Wellen 33, 35, 37, 39 sind über einen gemeinsamen Sumpf (vgl. Figur 4) geschmiert. Jedes Einzelgetriebe 15, 17 weist eine Übersetzung ins Langsame von beispielsweise 8,5:1 oder sogar 12:1 auf.

Das Getriebegehäuse 31 ist in einem regulären Befüllungszustand mit einem Getriebeöl, aber nicht in Gänze mit Öl befüllt, sondern ein Teil des Innenraums, d. h. des Innenvolumens 108 des Getriebegehäuses 31 ist mit Luft ausgefüllt.

Das in Figur 3 gezeigte Getriebe 1 mit seinem Getriebegehäuse 31 schafft durch seinen inneren Hohlraum ein von seiner ersten Innenseite 102 bis zu seiner zweiten Innenseite 104 sich erstreckendes Innenvolumen 108. In dem Innenvolumen 108 sind aber das Volumen reduzierende Bauteile angeordnet. Ein das Innenvolumen 108 reduzierendes Bauteil ist eine Ölführungswand 226. Das Innenvolumen 108 wird durch die Zahnräder, wie die Zahnräder 49, 49^{I}, 50, 50^{I}, 75, 75^{I}, 77, 77^{I}, durch Wellen, wie die Wellen 33, 35, 37, 39, und durch weitere Bauteile, wie Nadellager 61, 63 und Wälzlager, sowie durch eine Hülse 116 zum Teil reduziert. Das freie Innenvolumen 108 verringert sich durch die eingebauten Bauteile. Das verbleibende Innenvolumen 108 wird für den Betrieb des Getriebes 1 mit einer Getriebeflüssigkeit, wie einem Getriebeöl, bis zu einem gewissen Niveau gefüllt. Im Rest des Innenvolumens 108 verbleibt Luft.

Das Innenvolumen 108 ist teilweise gekammert. Die Ölführungswand 226 separiert Bereiche des Innenvolumens 108 voneinander. Die Ölführungswand 226 ist mit dem Getriebegehäuse 31 verbunden. Im Bereich einer Mitte 110 des Getriebes 1 ist die Wandstütze 210 der Ölführungswand 226 vorhanden, die zugleich als eine Lagerstütze für zwei Wellen 33, 35 ausgebildet ist. Die Wandstütze 210 separiert eine Sammelkammer 204^{I} des einen Einzelgetriebes 15 von einer Sammelkammer 204 des anderen Einzelgetriebes 17. In der Wandstütze 210 sorgt mindestens eine Ausgleichsdurchflussöffnung 212 für einen Niveauausgleich des Getriebeöls in den Sammelkammern 204, 204^{I} zwischen den Einzelgetrieben 15, 17. Mit anderen Worten sind die Einzelgetriebe 15, 17 in der Momentenübertragung voneinander entkoppelt aber beölungstechnisch miteinander gekoppelt. Durch separate aber öldurchlässige Bereiche des Innenvolumens 108 erfolgt mit Hilfe von Verzögerungsmitteln für einen Getriebeöldurchfluss, wie dem Verzögerungsmittel 180^{II}, eine bedarfsgerechte Getriebebeölung, wie noch eingehender erläutert wird.

Für Luft, die über eine Bohrung 118 in der Hülse 116 zu einer Entlüfterkappe 130 zur Abgabe nach außen gelangen soll, ist eine Entlüftungsstruktur in dem Getriebe 1 eingebaut.

Unter den als Stufenzahnrädern 79 ausgebildeten Zahnradpaaren 49, 50 bzw. 49^{I}, 50^{I} befindet sich im Bereich der Zahnradachse 114 die durch eine Bohrung 118 hohle Hülse 116. Der durch die Bohrung 118 geschaffene Hohlraum im Inneren der Hülse 116 hat über weitere Bohrungen 118^{I}, 118^{II} Verbindungen zum restlichen Innenvolumen 108 des Getriebes 1 bzw. des Getriebegehäuses 31.

Die Hülse 116 erstreckt sich von der einen Innenseite 102 bis zur ihr gegenüber liegenden Innenseite 104 des Getriebegehäuses 31. Die Hülse 116 ist eine das Gehäuse 31 versteifende Querverstrebung. Die (innere) Breite 106 des Getriebegehäuses 31 wird durch die Hülse 116 komplett überspannt. Von einer ersten Gehäusewand 41 bis zu einer zweiten Gehäusewand 43 erstreckt sich also die Hülse 116.

Vorteilhafterweise ist die Hülse 116 in einem mittleren Bereich M des Getriebes 1 angesiedelt. Der mittlere Bereich M des Getriebes 1 wird durch die zweite, mittlere Position 21 für das Zentern von Zahnrädern 49, 49', 50, 50^{I} verwendet.

Luft aus dem Innenvolumen 108, egal an welcher Stelle, solange sie irgendwie verteilt über die Breite 106 vorhanden ist, kann über die (Zuleitungs-)Bohrungen 118^{I}, 118^{II} in die zentral angeordnete, insbesondere die Breite 106 des Gehäuses 31 überspannende, Bohrung 118 der Hülse 116 gelangen. Anschließend gelangt die Luft zu der Entlüfterkappe 130. In der Gehäusewand 41, 43 können weitere, bereichsweise entlang der Gehäusewand 41, 43 sich erstreckende Bohrungen (nicht dargestellt) vorhanden sein, über die Luft in die die Breite 106 des Gehäuses 31 überspannende, Bohrung 118 gelangt. Solche Gehäusewandbohrungen dienen außerdem der Ölzufuhr zu den Nadellagern der Zahnräder 49, 49^{I}, 50, 50^{I}.

Wie sich aus einer Betrachtung der Details der Figur 3 ergibt, ist ein dünnerer Abschnitt 136 an den stärkeren Abschnitt 134 außerhalb der Mitte 110 des Getriebes 1 angeschlossen. Der dünnere Abschnitt 136 der Entlüftung erstreckt sich über weniger als die Hälfte der Strecke der Hülse 116, insbesondere in Richtung der Breite 106.

In Figur 4 ist ein Querschnitt durch das in einer anderen Schnittansicht in Figur 3 gezeigte Doppelgetriebe 1, schematisch entlang einer unterbrochenen Linie A gebildet, dargestellt. Die beiden Schnittebenen, jene zu Figur 3 und jene zu Figur 4 sind rechtwinklig zueinander gelegt. In Figur 4 wird eine Schnittansicht durch das zweite Teilgetriebe 17 gezeigt. Zur besseren Übersicht wurden einige Details aus Figur 3, wie die Hülse 116, die bereits anhand von Figur 3 ausführlich erläutert sind, in Figur 4 vereinfacht wiedergegeben.

Ein Schnitt in entsprechender Weise durch das erste, ebenfalls in Figur 3 dargestellte Teilgetriebe 15 würde einen zur Figur 4 gleichartigen Aufbau zeigen. In Figur 4 ist das Teilgetriebe 17 von dem Getriebegehäuse 31 umgeben. Dargestellt sind ein erstes Zahnrad 77, mit Zahnradzentrum 29, das auf der Ausgangswelle 39 angeordnet ist, und ein weiteres, als zweites Zahnrad zu bezeichnendes Zahnrad 50. Das erste Zahnrad 77 steht im Eingriff mit dem zweiten Zahnrad 50, das auf der ruhenden Zahnradachse 114 bzw. auf der mittleren Achse 45 sitzt. Das zweite Zahnrad 50 bildet zusammen mit einem dritten Zahnrad 49 ein Stufenzahnrad 79. In der gezeigten Konstruktion des Doppelgetriebes 1 kann auch davon gesprochen werden, dass die Zahnradachse 114 höher angeordnet ist als die Ausgangswelle 39, die auf einem gleichen Niveau, bezogen auf eine (nicht eingezeichnete) Fahrzeugstellfläche bzw. einer Straße, wie die Eingangswelle 35 angeordnet ist. Exemplarisch und zur Veranschaulichung der Geometrie sind die Zentren 25 und 45 mit einer strichpunktierten Geraden G verbunden. Die Eingangswelle 35 trägt ein viertes Zahnrad 75, das mit dem dritten Zahnrad 49 in Eingriff steht. Das auf der Zahnradachse 114 angeordnete Stufenzahnrad 79 wird indirekt beölt.

Nachfolgend wird das Augenmerk der Beschreibung auf einzelne Aspekte der Schmierung, insbesondere der Beölung gelegt.

In einem Bodenbereich des Doppelgetriebes 1 befindet sich der Getriebesumpf 160. Der Bodenbereich wird auch als Sumpf 160 bezeichnet, weil er in einem Ruhezustand des Doppelgetriebes 1 das Schmiermittel 162 in dem Gehäuse 31 aufnimmt. Es stellt sich ein erster Schmiermittelspiegel 164 des Sumpfs 160 ein. Der Schmiermittelspiegel 164 kann auch als Füllstand oder Pegel bezeichnet werden. Ein erster Zahnradbogenabschnitt 240 des ersten Zahnrads 77 ist in das Schmiermittel 162 eingetaucht. Wird das Doppelgetriebe 1 durch einen Motorantrieb in Drehbewegung versetzt, z. B. für eine Vorwärtsbewegung des in Figur 1 bzw. Figur 2 gezeigten Kraftfahrzeugs 500 bzw. 500^{I}, so bewegt sich das erste Zahnrad 77 mit einem Zahnraddrehsinn 260. Planschzähne, wie der erste Planschzahn 230, rotieren mit dem Zahnrad 77 durch den Sumpf 160 und fördern Schmiermittel 162 empor. Ein zweiter Zahnradbogenabschnitt 242 muss an dem zweiten Zahnrad 50 vorbeilaufen, bevor von dem ersten Zahnrad 77 gefördertes Schmiermittel 162 zu dem zweiten Zahnrad 50 bzw. zu der Lauffläche 250 des Zahnrads durch Transport gelangen kann. Das von dem ersten Zahnrad 77 auf das zweite Zahnrad 50 übertragene, überschüssige Schmiermittel 162 wird weiter transportiert, bevor es durch Zentrifugalkräfte abgetragen wird. Hierdurch erfolgt in einem Fahrbetrieb allmählich eine Absenkung des Schmiermittels 162 in dem Sumpf 160 von dem ersten Schmiermittelspiegel 164 auf einen niedrigeren Schmiermittelspiegel 168, der auch als dritter Schmiermittelspiegel bezeichnet werden kann. Damit verlängert sich zugleich der zweite Zahnradbogenabschnitt 242 um eine überschießende Länge, nämlich zu einem dritten Zahnradbogenabschnitt 244, also zu diesem Zahnradbogenabschnitt 244, der zurückgelegt werden muss, bis Schmiermittel 162 aus dem Sumpf 160 an dem zweiten Zahnrad 50 ankommt. Anders gesagt, bei einem niedrigeren Schmiermittelspiegel 168 verlängert sich die Zeit, bis Schmiermittel 162 zu dem zweiten Zahnrad 50 emporgeschöpft ist.

Das vierte Zahnrad 75 schöpft unterdessen mit einer gleichsinnigen Drehrichtung wie das erste Zahnrad 77 mit seinem Drehsinn 260 Schmiermittel 162 aus einer Zahnradbeölungswanne 208 mittels zweiter Planschzähne, wie dem zweiten Planschzahn 232, empor. Der Drehsinn 260 bezeichnet eine von zwei möglichen Drehrichtungen des Zahnrads 77. Das Schmiermittel 162 aus der Zahnradbeölungswanne 208 wird zumindest teilweise auf das dritte Zahnrad 49 übertragen. Die Zahnradbeölungswanne 208 weist in einem Ruhezustand des Doppelgetriebes1 einen zweiten Schmiermittelspiegel 166 auf, dessen Niveau bzw. Höhe durch eine Abfließbarriere 224 der Zahnradbeölungswanne 208 begrenzt ist. Der zweite Schmiermittelspiegel 166 ist durch das Verzögerungsmittel 180^{II}, vorzugsweise in Form einer elektromechanisch verschließbaren Blendenöffnung in einer Zahnradbeölungswand 208, auf einen weiteren, niedrigeren Schmiermittelspiegel 166" absenkbar. Die Zahnradbeölungswanne 208 und die sich daran in einer Vertikalrichtung anschließende Ölsammelwanne 234 sind als Bereiche der Ölführungswand 226 ausgebildet. Die Ölsammelwanne 234 befindet sich in einem Winkelbereich um die Eingangswelle 35 bzw. um das auf der Eingangswelle 35 angeordnete Zahnrad 75 (vgl. Figur 3), fängt peripher d. h. nicht auf ein Zahnrad gerichtete Ölspritzer ein und leitet sie in die Zahnradbeölungswanne 208. Getriebeöl ist aus der Zahnradbeölungswand 208 kontrolliert in die Sammelkammer 204 ableitbar. Damit können bei rotierender Eingangswelle 35 Energieverluste, die durch Planschen entstehen, gering gehalten werden. Das Verzögerungsmittel 180" wird vorzugsweise bei einem Getriebestillstand verschlossen. Ein solches, insbesondere doppeltes, Zwei-Getriebeölniveau-System 164, 166, 166^{II}, 168 eines Einzelgetriebes 17 ermöglicht eine schnelle Beölung des Stufenzahnrads 79, z. B. bei Getriebeanlauf, aus zwei unterschiedlichen Richtungen, d. h. von einer Antriebsseite bzw. einer Seite der Eingangswelle 35 und von einer Abtriebsseite bzw. einer Seite der Ausgangswelle 39.

Auf das Stufenzahnrad 79 emporgeschöpftes, überschüssiges Schmiermittel 162 wird durch Zentrifugalkräfte zumindest teilweise in Tröpfchenform einer Gravitationsablaufstrecke 190 zugeführt. Die Gravitationsablaufstrecke 190 erstreckt sich entlang einer Innenseite 104^{I} des Getriebegehäuses 31. Zwischen der Innenseite 104^{I} und der die Zahnräder 49, 75 und 77 teilweise umschließenden Ölführungswand 226 befindet sich ein System aus mehreren in Richtung der Gravitationswirkung nacheinander angeordneten Kammern, also ein Kammernsystem 200, die eine Mehrzahl von Verzögerungsmitteln, wie das Verzögerungsmittel 180, das eine Wandverengung ist, oder das Verzögerungsmittel 180^{I}, das ein Strömungsventil 188 ist, für einen Schmiermittelablauf aufweist. Die Ölführungswand 226 hat an ihrem oberen Ende die Gestalt eines Schabers, sodass Schmiermittel 162 von dem vorbeilaufenden Zahnrad 49 von dem Schaber abgestriffen werden kann. Eine erste Kammer ist die Tropfkammer 202, in der Schmiermitteltropfen aufgesammelt werden. Die Tropfkammer bildet in einer vertikalen Abfolge von Kammern eine oberste Kammer. Aufgesammeltes Schmiermittel wird am Boden der Tropfkammer von metallischem Abrieb durch einen Abscheidemagnet 228 getrennt. So gereinigtes Schmiermittel wird über eine Düse 182 in Verbindung mit einer Blende 184 der Sammelkammer 204 tröpfchenweise zugeführt. Das Wort "tröpfchenweise" schließt dabei mit ein, dass die Zuführung als eng gezogener Strömungsfaden erfolgen kann; eine bestimmte Tropfenform des Schmiermittels ist nicht erforderlich. Der Abscheidemagnet 228 verhindert ein Verstopfen der Düse 182. Durch die Blende 184 wird verhindert, dass Öltröpfchen direkt von der Innenseite 104^{I} in die Tiefe gelangen. Tröpfchen aus der Düse 182 gelangen in die Sammelkammer 204. In der Sammelkammer 204 kann sich ein Reservoir von Schmiermittel ansammeln. Somit kann die Sammelkammer als eine mittlere Kammer auch als eine erste Reservoirkammer bezeichnet werden. Die Sammelkammer 204 weist einen Wandabschnitt auf, der als Abgabeseitenteil 222 bezeichnet werden kann und eine Abflussdrossel 186 bildet. Von der Sammelkammer 204 gelangt das Schmiermittel 162 in die Reservoirkammer 206. Die Reservoirkammer 206, die auch als zweite Reservoirkammer 206 bezeichnet werden kann, ist eine unterste Kammer des Mehrkammersystems 200. Die Reservoirkammer 206 ist in ihrem Abgabeseitenteil 222^{I} mit dem Strömungsventil 188 ausgestattet. Durch das Strömungsventil 188, das ein Verzögerungsmittel 180^{I} bildet, kann ein Rückfluss von Schmiermittel 162 in den Sumpf 160 zumindest zeitweise gesperrt werden. Durch die somit beschriebenen Verzögerungsmittel 180, 180^{I} wird sichergestellt, dass der dritte Schmiermittelspiegel 168 eine für die Beölung des Doppelgetriebes 1 ausreichende Höhe aufweist, wobei aber energetische Verluste durch ein Rühren des ersten Zahnrads 77 in dem Sumpf 160 so gering wie möglich gehalten werden. Der zweite Schmiermittelspiegel 166^{I} in der Reservoirkammer 206 kann sich über das Verzögerungsmittel 180^{I}, d. h. über das Strömungsventil 188 in Richtung auf den Schmiermittelspiegel 168 abbauen, sofern der Schmiermittelspiegel 168 unter dem zweiten Schmiermittelspiegel 166^{I} liegt. Dank des Verzögerungsmittels 180^{I} geschieht ein Schmiermittelspiegelausgleich zwischen dem Schmiermittelspiegel 168, der im Sumpf 160 vorliegt, und dem zweiten Schmiermittelspiegel 166^{I}, der in der Reservoirkammer 206 vorliegt, verzögert. Der erste Schmiermittelspiegel 164 begünstigt eine schnelle, pumpenfreie Ölverteilung beim Anfahren des Doppelgetriebes 1. So ist es möglich, die Zähne 77, 50, 49, 75 mit einer Oberflächenschmierung 220 durch ein Schmiermittel 162 auszustatten.

Anhand der gemeinsam behandelten Figuren 5 bis 8 werden nunmehr eine Lagerbrille 330 und deren Einbau in ein Getriebe 1^{II} (vgl. Figur 8) beschrieben:
Figur 5 zeigt eine mögliche Ausgestaltung einer Lagerbrille 330, die als Bauteil in einem Doppelgetriebe 1^{II} (z. B. gemäß Figur 8 bzw. Figur 3) montierbar ist. Die Lagerbrille 330 (siehe Figur 3) hat eine erste Schmalseite 354 gegenüber einer zweiten Schmalseite 356. Den Schmalseiten 354, 356 folgt jeweils eine erste Plattenlangseite 358 bzw. eine zweite Plattenlangseite 360, wenn entlang einem Brillenrand 418 die Lagerbrille 330 umrundet wird. Die Seiten 354, 356, 358, 360 stellen kurvenförmige Begrenzungen der Stegplatte 352 dar. Sie sind stegplattenkantenartig Teil der Lagerbrille 330. Die Stegplatte 352 hat in ihren abgerundeten Eckbereichen eine erste Stiftaufnahme 424, eine zweite Stiftaufnahme 426, eine dritte Stiftaufnahme 428 und eine vierte Stiftaufnahme 430. Zwei in Bezug auf eine flache Erstreckung der Lagerbrille 330 diagonal angeordnete, einander gegenüberliegende Stiftaufnahmen, nämlich die erste Stiftaufnahme 424 und die dritte Stiftaufnahme 428, bzw. die zweite Stiftaufnahme 426 und die vierte Stiftaufnahme 430 sind jeweils als eine im Vergleich zur Stegplatte 352 dickere Befestigungsstruktur diagonal zueinander abgestützt. Die Befestigungsstruktur ist Teil einer Versteifung einer Plattenebene der Stegplatte 352.

Die Lagerbrille 330 weist etwa mittig zwischen den Stiftaufnahmen 424, 426, 428, 430 eine kreisrunde Lochstruktur 344 auf. Die Lochstruktur 344 ist als durchgängige Öffnung mit einer gestuften Wand durch die Stegplatte 352 hindurch vorhanden. Durch die Lochstruktur 344 wird eine Orientierung von zu befestigenden Wellen, wie die in Figur 3 gezeigten Ausgangswellen 37, 39, vorgegeben. Dadurch wird eine Abtriebsrichtung 338 in dem Doppelgetriebe (siehe Doppelgetriebe 1 von Figur 3) vorgegeben. Die Lochstruktur 344 zusammen mit den aus der Lagerbrille 330 herausstehenden Stegen 400, 400^{I}, 402, 404, 406 (siehe auch Figur 6 sowie Figur 7) bilden eine Einlochtragstruktur 342. Die Einlochtragstruktur 342 weist einstückig mit der Stegplatte 352 ausgebildete Ausprägungen und Vorstände auf. Die Einlochtragstruktur 342 hat eine Mehrzahl von Lochstrukturstützen, wie die Lochstrukturstütze 346, die jeweils radial von der Lochstruktur 344 weg gerichtet sich erstrecken. Durch einen Stützkragen 348 der Lochstrukturstützen 346 erfolgt eine besonders gute Stabilisierung der Lagerbrille 330 in einer Tangentialrichtung um die Lochstruktur 344.

Als eine weitere Maßnahme der mechanischen Stabilisierung der Lagerbrille 330 ist die Stegplatte 352 durch eine Mehrzahl von Stegen, wie dem ersten Steg 400, verstrebt. Die Stege 400 können auch als Stegplattenverdickungen bezeichnet werden.

In der Lochstruktur 344 befindet sich, insbesondere in ringförmiger Anordnung nebeneinander aufgereiht, eine Mehrzahl von gleichartig geformten Tonnenwälzkörpern, z. B. der Tonnenwälzkörper 372.

Die Schnittlinie A-A in Figur 5 zeigt an, wo die Lagerbrille 330 nach Figur 5 zu schneiden ist, um zu der Querschnittsansicht nach Figur 6 zu gelangen.

In Figur 6 ist u. a. zu sehen, dass die Lagerbrille 330 weitgehend spiegelsymmetrisch ist und eine erste Lagerbrillenseite 332 und eine zweite Lagerbrillenseite 334 hat, die anhand einer Spiegelfläche 336 zu bestimmen sind. Es können Ablaufbohrungen, insbesondere für Öl, an der Lagerbrille 330 vorhanden sein (nicht gezeigt), die abweichend zur Spiegelsymmetrie angeordnet sind. Die Spiegelfläche 336 erstreckt sich in der dargestellten Abbildung rechtwinklig aus der Darstellungsebene heraus. Ein erstes Tonnenlager 362 und ein zweites Tonnenlager 364 sind in zueinander gespiegelten Positionen (mit der Spiegelachse an der Spiegelfläche 336) angeordnet. Zwischen den Tonnenlagern 362, 364 ist ein Tonnenlagerabstand 368 vorhanden, durch den ein Zwischenraum 462 zur Verfügung gestellt wird. In den Zwischenraum 462 kann je ein Ende der Ausgangswellen (siehe Ausgangswellen 37 und 39 in Figur 3) zueinander beabstandet und somit ohne ein gegenseitiges Reiben in die Tonnenlager 362, 364 eingelegt werden. Der Zwischenraum 462 kann auch als Beölungsraum 462 für die Tonnenlager 362, 364 bezeichnet werden.

Der Beölungsraum 462 ist als Lagerbeölungskammer 450 zugleich Teil eines Mehrkammersystems 200^{I}, das dem verzögerten Rückfluss von Getriebeöl in den Sumpf (vgl. Sumpf 160 in Figur 3) dient. In der Lagerbeölungskammer 450 befindliches Getriebeöl fließt in die Tonnenlager 362, 364 hinein und gelangt aus den Tonnenlagern 362, 364 nach Umwälzung durch Lagerumlauf zeitlich verzögert zurück in den Sumpf. Getriebeöl wird aus zwei Reservoirkammern 448, 448^{I} über jeweils angeschlossene Düsen mit Beölungsöffnungen, wie die Düse 440 mit der Öffnung 442, die als Verzögerungsmittel 440, 442 dienen, in die Lagerbeölungkammer 450 geführt. In den Reservoirkammern 448, 448^{I} bildet sich durch beständigen Zufluss aus jeweils in Zuflussrichtung vorgeordneten Sammelkammern 416, 416^{I} jeweils ein Beölungsreservoir 446, 446^{I} aus. Die beiden Beölungsreservoire 446, 446^{I} werden als gemeinsames Reservoir betrachtet wird, weil davon beide Tonnenlager 362, 364 gemeinsam kontinuierlich mit Getriebeöl versorgt werden. An der Lagerbrille 330 sind Ölführungen 412, 414 vorhanden. Die Ölführungen 412, 414 sind als geneigte Flächen angeordnet, deren tiefstliegendes Ende jeweils in eine Sammelkammer 416, 416^{I} übergeht. Die Ölführungen 412, 414 sind spatel- oder spachtelartig. Es handelt sich um zwei blatt- oder schneidenartige Strukturen mit Ölführungsflächen. Auf den Ölführungen 412, 414 sammelt sich Spritzöl bzw. Öltropfen, das über einen vorgegebenen Abflusspfad (ohne Bezugszeichen) den Sammelkammern 416, 416^{I} zugeführt wird. Die Ölführungen 412, 414 können auch als Teil der Sammelkammern 416, 416^{I} betrachtet werden. Das Spritzöl wurde insbesondere durch im Sumpf bzw. in einer Beölungswanne planschende Zahnräder (vgl. Zahnrad 77 und Sumpf 160 bzw. Zahnrad 75 und Zahnradbeölungswanne 208 in Figur 3) gebildet.

Die Tonnenlager 362, 364 sind gleichartig aufgebaut, d. h., sie weisen jeweils Tonnenwälzkörper wie den Tonnenwälzkörper 372 auf, die in einem äußeren Tonnenlagerring, wie dem Tonnenlagerring 370, geführt sind. Der äußere Tonnenlagerring 370 wird durch einen Sprengring 366 in der Lagerbrille 330 gehalten. Die Tonnenlager 362, 364 sind somit zur Wartung nach Langzeitbetrieb von der Lagerbrille 330 separierbar, z. B. wenn Lagerverschleiß aufgetreten ist. Damit werden Wartungsarbeiten, wie ein Ersetzen bzw. ein Austausch der Lager 362, 364, erleichtert.

In einem Zwischenbereich zwischen einem Innendurchmesser 434 und einem Außendurchmesser 432 befindet sich jeweils eine Auflagefläche 436 der Stiftaufnahmen, wie der ersten Stiftaufnahme 424 bzw. der zweiten Stiftaufnahme 426. Es kann auch für beide Stiftaufnahmen 424, 426 von einer Auflagefläche, genauer der Auflagefläche 436, gesprochen werden, an der die Stiftaufnahmen 424, 426 enden. Eine Stiftaufnahme kann auch als Aufnahme für einen Stift bezeichnet werden. Eine Stiftaufnahmeerstreckung 438 ist den Auflageflächen, wie der Auflagefläche 436, als Abstand zugeordnet. Eine Stiftaufnahmeerstreckung 438 ist größer als der Tonnenlagerabstand 368, der durch die äußeren Tonnenlagerringe, wie durch den Tonnenlagerring 370, vorgegeben ist. Die Stiftaufnahmeerstreckung 438 beabstandet ein Auflageflächenpaar und ist vorzugsweise größer als der Außendurchmesser 432. Stiftaufnahmen, wie die Stiftaufnahmen 424, 426, eignen sich zur Aufnahme von einem Stift, der einen Stiftdurchmesser aufweist, der nur wenig kleiner als der Innendurchmesser 434 ist, sodass der Stift mit möglichst wenig Spiel in der Öffnung mit dem Innendurchmesser 434 aufnehmbar ist. Eine Größe des Außendurchmessers 432 sichert die Stiftaufnahmen 424, 226 gegen Ausbrechen. Der Außendurchmesser beträgt vorzugsweise mindestens das Zweifache des Innendurchmessers 434. Alle Stiftaufnahmen 424, 426 können gleich groß sein.

Stege, wie der Steg 400^{I}, bilden eine keilartige Verbindung zwischen den Auflageflächen, wie der Auflagerfläche 436, und der Lochstruktur 344. Der Steg 400^{I} ist zu der ersten Stiftaufnahme 424 hin verjüngt. Die Stege, wie der Steg 400^{I}, bilden eine material- bzw. gewichtseffiziente Versteifung der Lagerbrille 330, insbesondere gegen Verwindungen.

Um die Beschreibung des Mehrkammersystems 200^{I} gemäß Figur 6 weiterzuführen, befindet sich gegenüber der ersten Stiftaufnahme 424, wenn von der ersten Stiftaufnahme 424 in einer Diagonalrichtung auf eine gegenüberliegende Seite der Lochstruktur 344 weggegangen wird, eine erste Ölführung 412 auf der ersten Lagerbrillenseite 332 und eine zweite Ölführung 414 auf der zweiten Lagerbrillenseite 334. Die Ölführungen 412, 414 sind plattenartig ausgebildet und weisen zu den Seiten 332, 334 der Lagerbrille 330 hin eine größere Erstreckung auf als die Stege, wie z. B. der Steg 400'. Die Ölführungen 412, 414 dienen zum Aufsammeln von durch rotierende Zahnräder emporgespritztem Öl. Das Öl wird über die Ölzuführflächen 412, 414, die auch als Ölführungen bezeichnet werden können, einem Beölungsreservoir 446, 446^{I} zugeführt. Der Zufluss erfolgt, sofern keine Fahrbeschleunigung andersartig einwirkt, schwerkraftgetrieben. Aus dem Beölungsreservoir 446, 446^{I} wird mindestens eine Beölungsdüse, wie die Beölungsdüse 440, versorgt, durch deren Beölungsöffnung 442 Öl in einer Axialrichtung 444 bzw. mit einer Richtungskomponente entlang der Axialrichtung 444 abgegeben wird. Unterstützt durch eine Düsenwinkelstellung in Bezug auf die Axialrichtung 444 gelangt Öl beidseitig, d. h. quer zur Axialrichtung 444, zu den Tonnenlagern 362, 364. Rotierende Flächen (z. B. an Enden der Ausgangswellen 37, 39 in Figur 3), die den Zwischenraum begrenzen, fördern zusätzlich die Verteilung von Öl auf die bzw. auf den Tonnenlagern 362, 364. Die Beölungsöffnung 442 ist, vorzugsweise abgestimmt auf eine Getriebeölviskosität, so groß gewählt, dass eine Beölung möglichst zuverlässig und gleichmäßig, z. B. tröpfelnd oder als dünner Stromfaden, erfolgen kann.

Figur 7 zeigt eine perspektivische Darstellung der Lagerbrille 330 mit Blickrichtung auf die erste Lagerbrillenseite 332. Die zweite Lagerbrillenseite 334 ist gleichartig wie die erste Lagerbrillenseite 332 strukturiert. Durch Blick in die Figur 3 erschließt sich besonders einfach, dass auch gesagt werden kann, dass die erste Lagerbrillenseite 332 zur Lagerung für wenigstens eine Komponente eines ersten Teilgetriebes 15 dienen kann und die zweite Lagerbrillenseite 334 zur Lagerung für wenigstens eine Komponente eines zweiten Teilgetriebes 17 dienen kann.

Wie sich aus Figur 7 weiterhin ergibt, befindet sich an der Stegplatte 352 der Lagerbrille 330 eine erste Ölführung 412, die der ersten Lagerbrillenseite 332 zugeordnet ist, und eine zweite Ölführung 414, die der zweiten Lagerbrillenseite 334 zugeordnet ist. Die Ölführungen 412, 414 können auch als hervorstehende Verstärkungen der Stegplatte 352 bezeichnet werden. Die Ölführungen 412, 414 bilden zusammen mit der Stegplatte 352 einen taschenartigen Ölsammelbereich 416. Die Ölführungen 412, 414 erstrecken sich von einer Nähe einer Stiftaufnahme, nämlich der dritten Stiftaufnahme 428, bis zur jeweiligen Sammelkammer, wie der Sammelkammer 416. Die Ölführungen 412, 414 und die Sammelkammern 416 sowie die Lagerbeölungskammer 450 gehören zu einem Mehrkammersystem 200^{I}, das vorteilhaft für die passive Ölführung in einem Getriebe bzw. Getriebegehäuse (siehe z. B. Getriebe 1 bzw. Teilgetriebe 17 und Getriebegehäuse 31 in Figur 3) ist.

Als ein weiterer, interessanter Aspekt ist im Hinblick auf eine strukturelle Verstärkung der Stegplatte 352 zu erwähnen, dass die auf der Stegplatte 352 plattenartig, rechtwinklig abstehenden Ölführungen 412, 414 ein Stabilitätsstrukturelement der Einlochtragstruktur 342 und damit der Lagerbrille sind. Weitere Elemente, die Stabilitätsstrukturen schaffen, sind Lochstrukturstützen, wie die Lochstrukturstütze 346^{I}, Stege, wie der erste Steg 400, der zweite Steg 402, der dritte Steg 404, der vierte Steg 406, sowie ein erstes Stegkreuz 408 und ein zweites Stegkreuz 410. Stegkreuze, wie das erste Stegkreuz 408 und das zweite Stegkreuz 410, sind jeweils aus zwei oder drei überschneidenden Stegen gebildet. Stabilitätsstrukturelemente dienen dazu, Kräfte, wie Verformungskräfte oder Hebelkräfte, die in einem Betriebszustand eines Getriebes auf die Lochstruktur 344 wirken, zu den Stiftaufnahmen, wie die erste Stiftaufnahme 424, die zweite Stiftaufnahme 426, die dritte Stiftaufnahme 428 oder die vierte Stiftaufnahme 430, möglichst gleichmäßig räumlich verteilt abzuleiten. Die zuvor angesprochenen Kräfte bzw. Strukturbelastungsmomente, die im Betrieb auftreten, werden durch Ableitung über die Lagerbrille 330 auf das Gehäuse (siehe das Teilgehäuse 331 in Figur 8) weitergeleitet (und somit wird die Belastungsgrenze für plastische Verformungen eingehalten). Weitere Stabilitätsstrukturelemente der Einlochtragstruktur 342 sind an dem Randbereich 418 angeordnete Randstege, wie ein erster Randsteg 420 und ein zweiter Randsteg 422, sowie die zwischen bzw. neben den Stegen 402, 404, 406, 408, 410 angeordneten Bereiche der Stegplatte 352.

Die in Figur 8 gezeigte Ansicht veranschaulicht eine Möglichkeit, wie die Lagerbrille 330 in einem Teilgehäuse 331 für ein erstes Einzelgetriebe, wie z. B. das Einzelgetriebe 15 in Figur 3, einzubauen ist. Damit ist ein vollständiges Getriebe 1^{II} aufbaubar, das sich für ein Kraftfahrzeug 500 bzw. 500^{I} gemäß Figur 1 bzw. Figur 2 eignet. Ein Wälzlager 369 zur drehbaren Lagerung einer Ausgangswellenhülse, wie der Ausgangswellenhülse 337, die aber an einem perspektivisch verdeckten Ende der Ausgangswelle 39^{I} zu dem Teilgehäuse 331 hin angeordnet ist, wird durch einen Sprengring 394 in dem Teilgehäuse 331 gehalten. An einem gegenüberliegenden Endbereich der Ausgangswelle 39^{I}, an dem die Ausgangswellenhülse 337 vorhanden ist, erfolgt eine Lagerung der Ausgangswelle 39^{I} (vgl. auch die in Figur 3 gezeigten Ausgangswellen 37, 39) über ein Loslager 380 gemeinsam mit einer zugeordneten Radlagerfläche der Ausgangswelle 39^{I} in der Lagerbrille 330. Der zur axialen Halterung des Tonnenlagers 364 an der Lagerbrille 330 einzubauende Sprengring 366^{I} ist zur besseren Übersichtlichkeit freiliegend gezeichnet worden.

Es kann auch gesagt werden, die Einlochtragstruktur 342 bildet einen Teil des Loslagers 380.

Die Stiftaufnahmen, wie die erste Stiftaufnahme 424, der Lagerbrille 330 bilden einen Befestigungsrahmen 340 für das Loslager 380. Der Befestigungsrahmen 340 ist mit den Stiftaufnahmen, wie der Stiftaufnahme 424, an den Stifthaltern, wie dem Stifthalter 460, einem ersten Stifthalter, ansetzbar. Die dritte Stiftaufnahme 428 liegt an der Lagerbrille 330 diagonal der ersten Stiftaufnahme 424 gegenüber und ist einem Stifthalter 460^{I} zugeordnet, der, je nach Zählung, auch als dritter Stifthalter bezeichnet werden kann. Die Stifthalter 460, 460^{I} weisen jeweils Stützflächen 458, 458^{I} auf. Die Auflagefläche 436 (siehe Figur 6) und die Stützfläche 458 (siehe Figur 8) sind einander zugeordnet. Damit ist eine Axialposition der Lagerbrille 330 längs zu den Halbachsen 520, 522 (vgl. Figur 3) festgelegt. Zur Befestigung der Lagerbrille 330 ist ein erster Stift 382 durch die erste Stiftaufnahme 424 hindurchführbar. Im eingebauten Zustand der Lagerbrille 330 hat der erste Stift 382 einen festen Sitz in dem Stifthalter 460.

Entsprechend wird die Lagerbrille 330 durch wenigstens drei Stifte 382, 384, 386 gehalten. In der in Figur 8 gezeigten Darstellung sind ein zweiter Stift 384 und ein dritter Stift 386 zu sehen. Ein ebenfalls vorhandener vierter Stift ist verdeckt. Die Stifte 382, 384, 386 legen eine Radialposition der Lagerbrille 330 quer zu den Halbachsen 520, 522, wie die dritte Position 23 (vgl. Figur 3), fest. Es kann davon gesprochen werden, dass die Stifte 382, 384, 386 ein Montagesystem bzw. ein Montagearray für eine, insbesondere durch die Lagerbrille 330 geschaffene, äußere Lagerung 374 der Halbachsen 520, 522 (vgl. Figur 1 bzw. Figur 2) bilden. Die Stifte 382, 384, 386 weisen eine größere Länge auf als die Stiftaufnahmeerstreckung 438 in Figur 6. Anders gesagt, finden die Stifte 382, 384, 386 mit ihrem jeweiligen ersten Stiftende Halt in einem Loch eines entsprechenden Stifthalters, wie den Stifthaltern 460, 460^{I}, die Teil des (Teil-)Gehäuses 331 sind. Nach Einsetzen der Lagerbrille 330 in das erste Teilgehäuse 331 ist diese Baueinheit aus Lagerbrille 330 und Teilgehäuse 331 quasi miteinander eingerastet und kann, ohne zu verrutschen, zur weiteren Montage in eine Winkelstellung verbracht werden. Eine Montage des Teilgetriebes, wie das Teilgetriebe 15 in Figur 3, wird somit erleichtert. Zusätzlichen Halt finden die vier Stifte (siehe Stifte 382, 384, 386) mit deren zweiten Enden an einem zweiten Teilgehäuse (nicht dargestellt), das der Aufnahme eines zweiten Teilgetriebes, wie dem Teilgetriebe 17 in Figur 3, zum Aufbau eines Doppelgetriebes 1^{II} dient. Das Doppelgetriebe 1^{II} kann aufgrund seiner bevorzugten Bauform bzw. der Parallelanordnung von Wellen auch als Längsgetriebe bezogen auf eine Fahrzeuglängsachse 524 (siehe Figur 1 bzw. Figur 2) bezeichnet werden.

Die in den einzelnen Figuren gezeigten Ausgestaltungsmöglichkeiten lassen sich auch untereinander in beliebiger Form verbinden.

So ist es möglich, die Zwischenwände 73, 73^{I} länger oder kürzer auszugestalten und trotzdem einen gesamten, zusammenhängenden Ölraum in dem Getriebegehäuse 31 zu belassen.

So ist es natürlich auch möglich, das gemäß Figur 1 mit seinem Schwerpunkt vor der Hinterachse 518 angeordnete Getriebe 1 so in ein Fahrzeug einzubauen, dass es sich mit seinem Schwerpunkt, wie in Figur 2 am Beispiel des Getriebes 1^{I} gezeigt ist, hinter der Hinterachse 518 befindet. Das in Figur 8 nicht mit allen Komponenten gezeigte Getriebe 1^{II}, weil Figur 8 sich insbesondere mit der Anordnung der Lagerbrille und des Abtriebs im Getriebe beschäftigt, kann mit weiteren Komponenten, wie einer Doppel-Eingangswelle 32 und Komponenten der ruhenden, mittleren Achse 45, gemäß Figur 3 bzw. gemäß Figur 4 zu einem vollständigen Getriebe ergänzt und mit einer zweiten Gehäuseschale verschlossen werden.

Die in Figur 3 hohl dargestellte mittlere Achse 45 kann massiv ausgestaltet sein. Genauso können die Achsen 33, 35, 37, 39 hohl ausgestaltet sein.

Ein Fachmann versteht, dass die in Figur 1 bzw. Figur 2 beispielhaft dargestellte Hinterachsantriebsvariante eines Kraftfahrzeugs 500 eines Fahrzeugs mit Vorderachsantrieb entsprechend auch auf eine Vorderachsantriebsvariante umgestaltet werden kann. In dem Falle greift nicht nur die Lenkbewegung aus dem Lenkrad 514 über das Lenkgestänge 516 auf die Straßenräder 510, 512 und ihre Winkelposition, sondern auch der Antriebsstrang 3 mündete in den Straßenrädern 510, 512.

Die Erfindung lässt sich auch wie folgt darstellen. Ein Getriebe 1, z. B. für einen Duo-Elektromaschinenantriebsstrang, weist einen Sumpf 160 auf, in den zumindest ein erstes Zahnrad 77 eintaucht. Durch ein erstes Zahnrad 77 und ein zweites Zahnrad 49, 50, 79 bildet sich eine Zahnradstufe 55 benachbart zu einem Mehrkammernsystem 200. Das zweite Zahnrad 49, 50, 79 übernimmt die Funktion eines Zentrifugalschmierfilmabscheidezahnrads, um Öl unter Nutzung einer Zentrifugalkraft von der Oberfläche des Zahnrads 49, 50, 79 abzuscheiden und an das Mehrkammernsystem 200 zu liefern. Das Mehrkammernsystem 200 fungiert als ein kontinuierlich ein Schmiermittel 162 liefernden Strömungspfad, durch den Schmiermittel durch ein Verzögerungsmittel 180, 180^{I}, 180^{II} hindurch in den Sumpf 160 gelangen kann. Ein solches System kann auch Teil einer Lagerbrille sein. Von dem zweiten Zahnrad 49, 50, 79 verspritztes Schmiermittel 162 wird bei einem solchen Mehrkammernsystem 200 in einer Kammer 202, 204 des Mehrkammernsystems 200 aufgenommen, in einer weiteren Kammer 204, 206 aufbewahrt und nur über ein Verzögerungsmittel 180, 180', 180" in den Sumpf 160 rezirkuliert.

### Bezugszeichenliste

- 1, 1^{I}, 1^{II}: Doppelgetriebe bzw. Twin-Getriebe ausgebildet als Stirnradgetriebe
- 3, 3^{I}: Antriebsstrang, insbesondere Duo-Elektromaschinenantriebsstrang
- 5, 5^{II}: erste Elektromaschine
- 5^{I}: erstes Antriebsdrehmoment
- 7, 7^{II}: zweite Elektromaschine
- 7^{I}: zweites Antriebsdrehmoment
- 9: Energiespeicher, insbesondere elektrischer Akkumulator
- 11: erste elektrische Leitung
- 13: zweite elektrische Leitung
- 15: Einzelgetriebe, insbesondere erstes Einzelgetriebe bzw. Teilgetriebe
- 17: Einzelgetriebe, insbesondere zweites Einzelgetriebe bzw. Teilgetriebe
- 19: Position, erste
- 21: Position, zweite, mittlere
- 23: Position, dritte
- 25: Zahnradzentrum, insbesondere erstes Zahnradzentrum
- 27: Zahnradzentrum, insbesondere zweites Zahnradzentrum
- 29: Zahnradzentrum, insbesondere drittes Zahnradzentrum
- 31: Getriebegehäuse
- 32: Doppel-Eingangswelle
- 33: Eingangswelle
- 35: Eingangswelle
- 37: Ausgangswelle
- 39, 39^{I}: Ausgangswelle
- 41: Gehäusewand
- 43: Gehäusewand
- 44: Achse, insbesondere der Eingangswellen
- 45: Achse, mittlere
- 49, 49^{I}: drittes Zahnrad, insbesondere angetriebenes Stirnzahnrad im Zugbetrieb
- 50, 50^{I}: zweites Zahnrad, insbesondere abgetriebenes Stirnzahnrad im Zugbetrieb
- 51: Gehäuseboden
- 53: Stufe, erste, insbesondere Zahnradstufe mit Übersetzung
- 55: Stufe, zweite, insbesondere Zahnradstufe mit Übersetzung
- 57, 57^{I}: Zahn
- 59, 59^{I}: Zahn
- 61: Nadellager
- 63: Nadellager
- 65: Wälzlager
- 67: Wälzlager
- 69: Wälzlager
- 71: Wälzlager
- 73, 73^{I}: Gehäusewand, insbesondere Gehäusezwischenwand wie eine Lagerbrille
- 75, 75^{I}: viertes Zahnrad, insbesondere der Eingangswelle
- 77, 77^{I}: erstes Zahnrad, insbesondere Stirnzahnrad der Ausgangswelle
- 79: Stufenzahnrad
- 102: Innenseite, erste Innenseite
- 104, 104^{I}: Innenseite, zweite Innenseite
- 106: Breite
- 108: Innenvolumen
- 110: Mitte, insbesondere des Gehäuses, bzw. mittlerer Bereich des Gehäuses
- 114: Zahnradachse, insbesondere ruhende Zahnradachse
- 116: Hülse
- 118, 118^{I}, 118^{II}: Bohrung
- 120: Gehäuselängsrichtung
- 130: Entlüfterkappe bzw. Entlüfterelement
- 134: erster Abschnitt, insbesondere stärkerer Abschnitt
- 136: zweiter Abschnitt, insbesondere schwächerer Abschnitt
- 160: Sumpf
- 162: Schmiermittel
- 164: erster Schmiermittelspiegel, insbesondere des Sumpfes
- 166, 166', 166": weiterer Schmiermittelspiegel, insbesondere zweiter Schmiermittelspiegel
- 168: dritter Schmiermittelspiegel, insbesondere des Sumpfes
- 180, 180^{I}, 180^{II}: Verzögerungsmittel
- 182: Düse
- 184: Blende
- 186: Drossel
- 188: Strömungsventil
- 190: Gravitationsablaufstrecke
- 200: Kammersystem, insbesondere Mehrkammernsystem
- 202: Tropfkammer, insbesondere oberste Kammer
- 204, 204^{I}: Sammelkammer, insbesondere erste reservoirbildende Kammer
- 206: Reservoirkammer, insbesondere unterste Kammer
- 208: Zahnradbeölungswanne, insbesondere Zahnradbeölungskammer
- 210: Wandstütze, insbesondere Lagerstütze
- 212: Durchbruch, insbesondere Ausgleichsdurchflussöffnung
- 220: Oberflächenschmierung
- 222, 222^{I}: Abgabeseitenteil
- 224: Abfließbarriere
- 226: Ölführungswand, insbesondere in Gestalt eines Ölschabers
- 228: Abscheidemagnet
- 230: erster Planschzahn
- 232: zweiter Planschzahn
- 234: Ölsammelwanne
- 240: erster Zahnradbogenabschnitt
- 242: zweiter Zahnradbogenabschnitt
- 244: dritter Zahnradbogenabschnitt
- 250: Lauffläche eines Zahnrads
- 260: Zahnraddrehsinn

- 330: Lagerbrille
- 331: Teilgehäuse des Getriebes
- 332: erste Lagerbrillenseite
- 334: zweite Lagerbrillenseite
- 336: Spiegelfläche
- 337: Ausgangswellenhülse
- 338: Abtriebsrichtung
- 340: Befestigungsrahmen
- 342: Einlochtragstruktur
- 344: Lochstruktur
- 346, 346^{I}: Lochstrukturstütze
- 348: Stützkragen
- 352: Stegplatte
- 354: erste Plattenschmalseite
- 356: zweite Plattenschmalseite
- 358: erste Plattenlangseite
- 360: zweite Plattenlangseite
- 362: erstes Tonnenlager, insbesondere Wälzkörperlager
- 364: zweites Tonnenlager, insbesondere Wälzkörperlager
- 366, 366^{I}: Sprengring
- 368: Tonnenlagerabstand, insbesondere Abstand zwischen zwei Wälzkörperlagern
- 369: Wälzlager
- 370: äußerer Tonnenlagerring, insbesondere Lauffläche
- 372: Tonnenwälzkörper
- 374: äußere Lagerung
- 380: Loslager, insbesondere Radlagerfläche
- 382: erster Stift
- 384: zweiter Stift
- 386: dritter Stift
- 394: Sprengring
- 396: Zahnrad, insbesondere drittes Zahnrad
- 400, 400^{I}: erster Steg
- 402: zweiter Steg
- 404: dritter Steg
- 406: vierter Steg
- 408: erstes Stegkreuz
- 410: zweites Stegkreuz
- 412: erste Ölführung, insbesondere Ölzuführfläche
- 414: zweite Ölführung, insbesondere Ölzuführfläche
- 416, 416^{I}: Ölsammelbereich, insbesondere Sammelkammer für Öltropfen
- 418: Brillenrand
- 420: erster Randsteg
- 422: zweiter Randsteg
- 424: erste Stiftaufnahme
- 426: zweite Stiftaufnahme
- 428: dritte Stiftaufnahme
- 430: vierte Stiftaufnahme
- 432: Außendurchmesser der Stiftaufnahme
- 434: Innendurchmesser der Stiftaufnahme
- 436: Auflagefläche
- 438: Stiftaufnahmeerstreckung
- 440: Verzögerungsmittel, insbesondere Beölungsdüse
- 442: Verzögerungsmittel, insbesondere Beölungsöffnung wie eine Blendenöffnung
- 444: Axialrichtung der Düse
- 446, 446^{I}: Beölungsreservoir
- 448, 448^{I}: Reservoirkammer
- 450: Lagerbeölungskammer
- 458, 458^{I}: Stützfläche
- 460, 460^{I}: Stifthalter, insb. erster Stifthalter
- 462: Zwischenraum

- 500, 500^{I}: Kraftfahrzeug
- 502: Fahrrichtung
- 504: Fahrzeugboden
- 506: erstes Straßenrad
- 508: zweites Straßenrad
- 510: drittes Straßenrad
- 512: viertes Straßenrad
- 514: Lenkrad
- 516: Lenkgestänge
- 518, 518': Fahrzeughinterachse
- 520: erste Halbachse
- 522: zweite Halbachse
- 524: Fahrzeuglängsachse
- 526: Fond
- 528: Kofferraumbereich
- 532: Koppelung
- 534: Koppelung

- A: Schnittebene
- B: Bezugsebene
- G: Gerade
- M: Bereich, insbesondere mittlerer Bereich
- d₁: Durchmesser eines Zahnrads 49, 49^{I}
- d₂: Durchmesser eines Zahnrads 50, 50^{I}
- β₁: Schrägungswinkel
- β₂: Schrägungswinkel

## Patentansprüche

1. Lagerbrille (330) mit einer Lochstruktur (344),
**dadurch gekennzeichnet, dass**
die Lochstruktur (344) als eine einzige Durchgangsöffnung in der Lagerbrille (330) zur Aufnahme jeweils eines Endes zweier Ausgangswellen (37, 39, 39^{I}) ausgebildet ist,
und dass die Lagerbrille (330) Ölzuführflächen (412, 414) aufweist,
wobei die Ölzuführflächen (412, 414) für ein zunächst passives Zuführen eines als Spritzöl aufgenommenen Getriebeöls zu einem Beölungsreservoir (446, 446^{I}) ausgebildet sind, wobei das Beölungsreservoir (446, 446^{I}) an einen Ölsammelbereich (416, 416^{I}) auf den Ölzuführflächen (412, 414) anschließt,
von wo aus das Getriebeöl in eine Reservoirkammer (448, 448^{I}) gelangen kann,
wobei wenigstens eine Beölungsöffnung (442) oder wenigstens eine Beölungsdüse (440) aus der Reservoirkammer (448, 448^{I}) in eine Lagerbeölungskammer (450) der Lochstruktur (344) führt.

2. Lagerbrille (330) nach Anspruch 1,
**dadurch gekennzeichnet, dass**
die Lagerbrille (330) einteilig ausgebildet ist und vorzugsweise die Lochstruktur (344) in einem Lagerbrillenzentrum der Lagerbrille (330) angeordnet ist,
wobei die Lochstruktur (344) insbesondere als einzige Lochstruktur (344) der Lagerbrille (330) vorhanden ist, wobei vorzugsweise die Lochstruktur (344) einen Stützkragen (348), wie eine Manschette, um ihre ringförmige Öffnung, also um die Durchgangsöffnung, hat.

3. Lagerbrille (330) nach Anspruch 1 oder Anspruch 2,
**dadurch gekennzeichnet, dass**
die Lagerbrille (330) ein Mehrkammernsystem (200^{I}) aufweist, das vorzugsweise durch Metallguss ausgeformt ist.

4. Lagerbrille (330) nach einem der vorhergehenden Ansprüche,
**dadurch gekennzeichnet, dass**
die Ölzuführflächen (412, 414) als Teil einer Stützstruktur oder als Teil einer Stegstruktur der Lagerbrille (330) ausgebildet sind, die insbesondere von der Stegplatte (352) als Stabilitätsstrukturelemente (346', 400, 402, 404, 406, 408, 410, 420, 422) einer Einlochtragstruktur (342) abstehen.

5. Lagerbrille (330) nach einem der vorhergehenden Ansprüche,
**dadurch gekennzeichnet, dass**
die Ölzuführflächen (412, 414) als hervorstehende Verstärkungen einer Stegplatte (352) der Lagerbrille (330) ausgebildet sind, die sich entlang eines Plattenkörpers der Lagerbrille (330) von einem Lagerbrillenrand in Richtung eines Lagerbrillenzentrums erstrecken, wobei die Ölzuführflächen (412, 414) ein Gefälle für einen schwerkraftgetriebenen Zufluss bieten, das bis an die Durchgangsöffnung, die als Abtriebswellenaufnahmeöffnung einer Aufnahme jeweils eines der Enden der Ausgangswellen (37, 39, 39^{I}) dient, heranführt,
wobei insbesondere die Durchgangsöffnung durch die Stegplatte (352) hindurch durchgängig ist und eine gestufte Wand hat.

6. Lagerbrille (330) nach einem der vorhergehenden Ansprüche,
**dadurch gekennzeichnet, dass**
die Ölzuführflächen (412, 414) plattenartig ausgebildet sind und zu Seiten (332, 334) der Lagerbrille (330) hin eine größere Erstreckung aufweisen als Stege (440^{I}) der Lagerbrille (330), die eine Versteifung der Lagerbrille (330) bilden.

7. Lagerbrille (330) nach einem der vorhergehenden Ansprüche,
**dadurch gekennzeichnet, dass**
die Ölzuführflächen (412, 414) in eine Ölsammelkammer (416, 416^{I}) übergehen, wobei insbesondere die Reservoirkammer (448, 448^{I}) barrierefrei an die Ölsammelkammer (416, 416^{I}) angeschlossen ist und vorzugsweise die Reservoirkammer (448, 448^{I}) trichterförmig ist.

8. Lagerbrille (330) nach Anspruch 7,
**dadurch gekennzeichnet, dass**
die Ölsammelkammer (416, 416^{I}) und die Reservoirkammer (448, 448^{I}) an der Lagerbrille (330) jeweils paarweise, insbesondere beidseitig an dem Plattenkörper der Lagerbrille (330), vorhanden sind.

9. Lagerbrille (330)
nach einem der Ansprüche 4 bis 8,
**dadurch gekennzeichnet, dass**
in der Lagerbrille (330) zum Stützen der Ausgangswellen (37, 39, 39^{I}), die Zahnräder (396) aufweisen, zwei Wälzkörperlager (362, 364), wie zwei Tonnenlager (362, 364), angeordnet sind,
wobei vorzugsweise die Lagerbrille (330) als eine Einlochtragstruktur (342) ausgebildet ist.

10. Lagerbrille (330) nach Anspruch 9,
**dadurch gekennzeichnet, dass**
die Lagerbeölungskammer (450) in der Lagerbrille (330) durch einen Abstand (368), der zwischen zwei Wälzkörperlagern (362, 364) vorgebbar ist, seitlich begrenzt wird,
wobei die Lagerbeölungskammer (450) ein zylinderförmiges Volumen für das Getriebeöl, wie Schmieröl, aufweist und
insbesondere so gestaltet ist, dass in der Lagerbeölungskammer (450) das Getriebeöl seitlich zu beiden Wälzkörperlagern (362, 364) abfließen kann,
wobei das Getriebeöl insbesondere schwerkraftgetrieben auf einem Strömungspfad verzögert in einen Sumpf zurückgelangen kann.

11. Lagerbrille (330)
nach einem der vorhergehenden Ansprüche,
**dadurch gekennzeichnet, dass**
die Lagerbrille (330) durch Stifte (382, 384, 386) an einem Getriebegehäuse (31, 51, 331) herausnehmbar und fixierbar ist,
wofür die Lagerbrille (330) vier Stiftaufnahmen (428) hat, durch die jeweils ein Stift (382, 384, 386) zur Befestigung der Lagerbrille (330) hindurchführbar ist,
und insbesondere eine erste Ölzuführfläche (412) und eine zweite Ölzuführfläche (414) sich nahe von einer der Stiftaufnahmen (428) bis zu einer jeweiligen Sammelkammer (416) erstrecken.

12. Lagerbrille (330)
nach einem der Ansprüche 4 bis 11,
**dadurch gekennzeichnet, dass**
die Stegplatte (352) eine zu ihren Rändern (418) hin verjüngende Stegplatte (352) ist, aus der vorzugsweise stabilisierende Stege (400, 400', 402, 404, 406) in Räume für zwei Einzelgetriebe hinausragen,
wobei die Stegplatte (352) um eine zentrale Öffnung, die insbesondere das eine Loch der Einlochtragstruktur (342) formt, herum aufgestülpt ist.

13. Lagerbrille (330)
nach einem der vorhergehenden Ansprüche,
**dadurch gekennzeichnet, dass**
die wenigstens eine Beölungsdüse (440) in die Lagerbrille (330) integriert ist,
wobei die
mindestens eine Beölungsdüse (440) eine radial in die Lagerbeölungskammer (450) einleitende Beölungsdüse (440) ist,
wobei die Beölungsdüse (440) aus einem Beölungsreservoir (446) der Reservoirkammer (448, 448^{I}) mit Getriebeöl versorgbar ist, das als Spritzöl über die Ölzuführflächen (412, 414) der Lagerbrille (330) in dem Beölungsreservoir (446) zu sammeln ist,
wobei vorzugsweise die Beölungsdüsen (440) eine Düsenwinkelstellung mit einer Richtungskomponente entlang einer Axialrichtung (444) haben, damit Öl beiderseitig zu rotierenden Flächen an den Enden der Ausgangswellen (37, 39) hin, vorzugsweise auf deren Tonnenlager (362, 364), verteilbar ist,
und wobei insbesondere die wenigstens eine Beölungsdüse (440) oder die wenigstens eine Beölungsöffnung (442) als Verzögerungsmittel (440, 442) dient.

14. Verfahren zum Schmieren eines Getriebes (1, 1^{I}, 1^{II}),
insbesondere eines Twin-Getriebes, bevorzugt ausgebildet als Stirnradgetriebe, eines Duo-Elektromaschinenantriebstrangs (3, 3^{I}),
wobei das Getriebe (1, 1^{I}, 1^{II}) eine Lagerbrille (330) aufweist,
und wobei das Getriebe für eine passive Schmierfilmverteilung ausgebildet ist,
bei der durch Rotation von Zahnrädern (49, 49^{I}, 50, 50^{I}, 75, 75^{I}, 77, 77^{I}, 79) des Getriebes (1, 1^{I}, 1^{II}) Schmiermittel (162) über sämtliche Laufflächen (250) des Getriebes (1, 1^{I}, 1^{II}) verteilt wird,
**dadurch gekennzeichnet, dass**
die Lagerbrille (330) eine Lochstruktur (344) für jeweils ein Ende von zwei Antriebswellen (33, 35) des Getriebes (1, 1^{I}, 1^{II}) aufweist und
aufgrund von Zentrifugalkraft im Getriebe (1, 1^{I}, 1^{II}) verspritztes Schmiermittel (162) in einer Sammelkammer (416, 416^{I}) der Lagerbrille (330) zur Verwahrung des Schmiermittels (162) aufgenommen wird,
um dann in einer Reservoirkammer (448, 448^{I}) aufbewahrt zu werden,
wobei die Lagerbrille (330) als Trennelement von zwei Teilgetrieben (15, 17) des Getriebes (1, 1', 1^{II}) einen Austausch von Schmiermittel (162) zwischen den Teilgetrieben (15, 17) ermöglicht, indem Getriebeöl aus der Reservoirkammer (448, 448^{I}) beidseitig zu rotierenden Flächen an Enden beider Ausgangswellen (37, 39) des Getriebes (1, 1^{I}, 1^{II}), die in der Lagerbrille (330) jeweils in einem Wälzkörperlager (362, 364) gelagert sind, gelangt,
wobei vorzugsweise die Lagerbrille (330) nach einem der vorhergehenden Ansprüche ausgebildet ist.

15. Kraftfahrzeug mit einem Antriebsstrang (3, 3'), der ein Doppelgetriebe (1, 1^{I}, 1^{II}) aufweist, an dem antriebsseitig eine erste Elektromaschine (5, 5^{II}) und eine zweite Elektromaschine (7 und 7^{II}) für einen Einzelradantrieb befestigt ist,
**dadurch gekennzeichnet, dass**
das Doppelgetriebe (1^{II}) eine Lagerbrille (330) nach einem der Ansprüche 1 bis 13 aufweist,
wobei das Doppelgetriebe (1^{II}) vorzugsweise mit einem Verfahren gemäß Anspruch 14 schmierbar ist.
